# EUROPEAN PATENT APPLICATION

(11) **EP 0 627 293 A1**
(43) Date of publication of application: **07.12.1994**
(21) Application number: 93921110.8
(22) Date of filing: 04.10.1993
(51) Int. Cl.: B29C 45/33

(54) **MULTILAYER DISC FAN MOLDING DIE AND METHOD OF MANUFACTURING MULTILAYER DISC FANS USING THE SAME**

(30) Priority: 05.10.1992 JP 266378/92; 29.06.1993 JP 159500/93
(71) Applicant: TOTO LTD., Kitakyushu-shi Fukuoka 802 (JP)
(72) Inventor: SHIOTANI, Masao Toto Ltd. 1-1, Nakashima 2-chome, Kitakyushu-shi Fukuoka 802 (JP); OHMORI, Tadao Toto Ltd. 1-1, Nakashima 2-chome, Kitakyushu-shi Fukuoka 802 (JP); HIROI, Kazunori Toto Ltd. 1-1, Nakashima 2-chome, Kitakyushu-shi Fukuoka 802 (JP); KAWAUCHI, Yoshiyuki Toto Ltd., Kitakyushu-shi Fukuoka 802 (JP); HARAGA, Hisato Toto Ltd. 1-1, Nakashima 2-chome, Kitakyushu-shi Fukuoka 802 (JP); HAMADA, Yasuo Toto Ltd. 1-1, Nakashima 2-chome, Kitakyushu-shi Fukuoka 802 (JP); AKAMATSU, Katsushi Toto Ltd., Kitakyushu-shi Fukuoka 802 (JP); UEYAMA, Kohji Toto Ltd. 1-1, Nakashima 2-chome, Kitakyushu-shi Fukuoka 802 (JP)
(74) Representative: Levy, David
(86) International application number: JP9301422
(87) International publication number: WO9407676

(57) **Abstract**

A multilayer disc fan molding die capable of manufacturing multilayer precision disc fans at a low cost, and a method of manufacturing multilayer disc fans using the same. A die for molding a resin into a multilayer disc fan is formed so that it consists of inner and outer cores, and at least one of these cores is composed of a plurality of thin blades piled with very narrow clearances maintained thereamong and through holes for resins provided in these blades. The size of each clearance between adjacent blades corresponds to the thickness of each of the disc members of a multilayer disc fan to be molded, and the thickness of each blade the size of each clearance between adjacent disc members of the multilayer disc fan to be molded.

## Description

### TECHNICAL FIELD

The present invention relates to a mold for molding a multi-stacked circular plate fan which is capable of producing a precise multi-stacked circular plate fan made of a multiplicity of fine and thin circular plates and a method for producing a multi-stacked circular plate fan using the above mold.

In this specification, the fan means any fan which is applicable to various fluid machines for carrying out the treatment of a fluid such as air or water. The fluid machine is a concept which includes an air fan, a blower fan, a pump and a compressor.

### BACKGROUND OF ART

Conventionally, there is known a fan structure called a multi-stacked circular plate fan. The fan is made by stacking a multiplicity of thin circular plates with a fine gap therebetween and is featured by its excellent fan characteristic, namely, its extremely silent rotation during a fan operation.

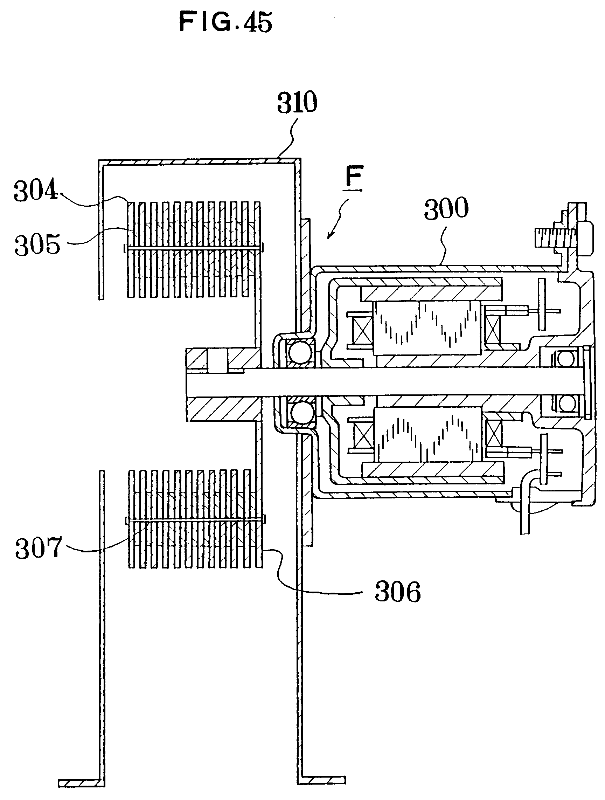

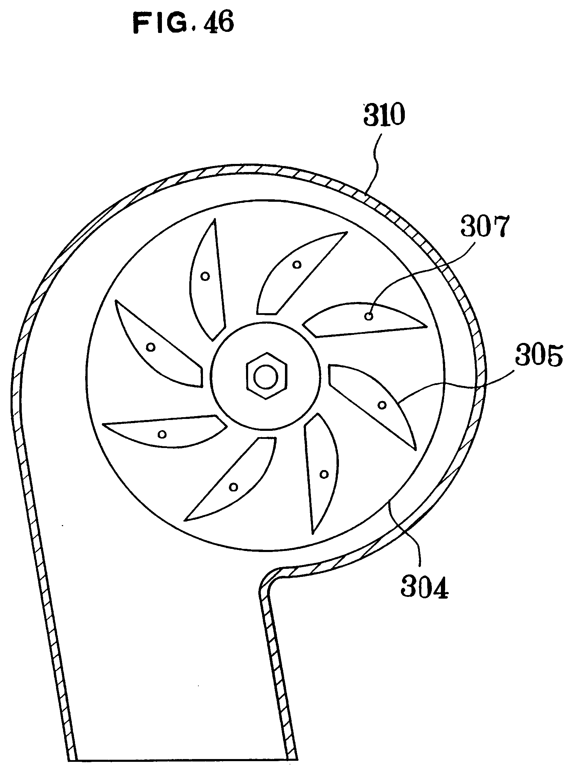

To explain the construction of such a fan concretely in view of Fig. 45 and Fig. 46, a multiplicity of thin annular circular plates 304 are stacked on a circular mounting plate 306 with a desired gap to provide a multi-stacked circular plate fan F. The multi-stacked circular plate fan F produced in this manner can be used, for example, in a following way.

The multi-stacked circular plate fan F is connected to the output shaft of a power-operated motor 300 mounted on one side of a fan casing 110 by way of a mounting plate which forms a part of the fan.

The multi-stacked circular plate fan F is encased in a fan casing 310 which is provided with an air inlet opening at a portion thereof which faces a central hollow portion of the multi-stacked circular plate fan F and an air outlet opening at a side portion of the multi-stacked circular plate fan F.

Due to such a construction, upon rotation of the multi-stacked circular plate fan F with the actuation of the power-operated motor 300, the air is sucked into the fan casing 310 through the air inlet opening and then an air flow is generated within the multi-stacked circular plate fan and the air is charged through the air outlet opening.

Since the multi-stacked circular plate fan F generates an air flow making use of a centrifugal force of air generated by a shearing force caused by a rotation of annular thin circular plates 304, the fan operation becomes extremely silent. Furthermore, by interposing a multiplicity of spacers between annular circular plates 304 in a circumferentially spaced apart manner, the blow-off amount of air can be increased.

The manufacturing of the multi-stacked circular plate fan F, has several problems. Namely, a multiplicity of annular circular plates 304 and a multiplicity of spacers 305 which act as air regulating vanes are prepared as separate elements independently. The spacers 305 are interposed between the annular circular plates 304 and thereafter they are pierced by a plurality of connecting pins 307 and fastened integrally in a stacked manner.

The above manufacturing method has drawbacks such that it necessitates a manual operation which results in a poor efficiency and a high manufacturing cost. Furthermore, thinner the thickness of the annular circular plates 304, the circular plate assembling operation becomes more cumbersome or difficult in terms of assembling technique.

Accordingly, as disclosed in Japanese Laid-Open Patent Publication SHO-56-41492, an idea to integrally mold a multi-stacked circular plate fan by an injection mold is proposed. This publication, however, completely fails to disclose any concrete methods or steps for manufacturing the multi-stacked circular plate fan.

As references for an integral molding technique for a multi-stacked circular plate fan, there exist Japanese Laid-Open Patent Publication HEI-2-212112, Japanese Laid-Open Patent Publication HEI-4-244822, Japanese Laid-Open Patent Publication HEI-2-248214 and Japanese Laid-Open Patent Publication HEI-5-131499.

Among these references, Japanese Laid-Open Patent Publication HEI-2-248214 discloses a method for molding a fan while other references discloses techniques for molding other articles other than fan.

Japanese Laid-Open Patent Publication HEI-2-248214 relates to a mold for molding a cross-flow fan used especially in air conditioners. The fan comprises a multiplicity of blade-like thin plates parallely extended between annular circular plates which form ribs and these thin plates are directed radially.

The fan is provided with a considerably wide space or gap between the annular circular plates so that the fan structure is completely different from the multi-stacked circular plate fan which this invention aims at. Accordingly, the molding technique disclosed in this reference is not available as a molding technique for molding the multi-stacked circular plate fan.

Turning to Japanese Laid-Open Patent Publication HEI-4-244822 and Japanese Laid-Open Patent Publication HEI-5-131499, technique disclosed in these references is similar to the technique of this invention so long as the injection mold technique for producing molded articles having a plurality of parallel blades is concerned. However, these publications are not concerned with techniques for producing air blow fans. Therefore, this mold is constructed such that the thin plates have their outer peripheral portion open while a support strut is formed at the core portion of the mold. Accordingly, the molded article can only has its outer peripheral portion open. Namely, the mold technique has a drawback that it cannot mold a stacked body of this invention which is made of circular plates having both inner and outer peripheries thereof open-ended.

Japanese Laid-Open Patent Publication HEI-2-212112 is concerned with a technique on a mold for molding a bobbin, wherein the bobbin having a multiplicity of stacked annular circular plates is integrally molded by means of inner and outer core members. This reference discloses, in this respect, the technique closest to the mold technique of this invention for molding a multi-stacked circular plate fan.

However, the publication discloses the mold for producing the bobbin, but an air blow fan. Therefore, this mold is also constructed such that thin plates have their outer peripheral portions open while a support strut is formed at the core portion of the mold. Accordingly, the molded article can only has its outer peripheral portion open-ended. Namely, the mold technique has a drawback that it cannot mold a stacked body of this invention which is made of circular plates having both inner and outer peripheries thereof open-ended.

Furthermore, since a gate is formed at the inner peripheral portions of the stacked blades, in case a circular plate fan having circular plates of a large radial width and therefore being easily deformed is to be molded, the resin may not uniformly flow into the every corners of the gap between blades so that so called 'welds' may occur.

Since the distal ends of the blades are not supported at all, the portion of the mold which is close to the gates positioned at the distal ends of the blades tends to deform when the resin injection pressure is applied thereto.

In this manner, each reference lacks in the technique inevitable for an integral molding of the multi-stacked circular plate fan and therefore the manufacturing of the multi-stacked fan has been impossible.

Accordingly, it is an object of the present invention to provide a drastic mold which can overcome these drawbacks of prior art and can provide a multi-stacked circular plate fan and a method for producing the multi-stacked circular plate fan making use of the mold.

### DISCLOSURE OF THE INVENTION

The first invention discloses a mold for molding a multi-stacked circular plate fan which is characterized in that a resin mold for molding the multi-stacked circular plate fan is made of an inner core and an outer core which are separated from each other, that at least either of the inner core or the outer core is provided with a multiplicity of thin blades stacked with a desired narrow gap and communication holes for resin inflow which are formed in the respective blades, and that the gap between the blades corresponds to a thickness of the circular plate of the multi-stacked circular plate fan to be molded and the thickness of the blade corresponds to the gap between the circular plates of the multi-stacked circular plate fan to be molded.

The first invention is also characterized in that the mold is constructed as follows.
① The outer periphery of the inner core and the inner periphery of the outer core are constructed such that these peripheries come into contact with each other at the time of molding.
② Either of the inner core or the outer core is made of a plurality of separable units and these units are slidable so that they can be assembled at the time of molding to form either the inner core or the outer core and can be separated from each other at the time of removing a molded multi-stacked fan from the mold.
③ The communication holes for resin inflow are formed in the blades mounted on either of the inner core or the outer core to define spacer molding spaces and resin is injected from the communication holes for resin inflow and is filled in gaps defined between blades and the spacer molding spaces.
④ In injecting the resin into the gaps between stacked blades mounted on either of the inner core or the outer core, the resin is injected in a direction approximately parallel to each blade.
⑤ The gaps formed between a multiplicity of blades mounted on either of the inner core or the outer core define circular plate molding spaces and most of these circular plate molding spaces are respectively provided with gates.
⑥ A multiplicity of blades have their proximal portions thereof fixed so as to assure a narrow gap between blades and a gate is provided at a fixed portion to inject resin into gaps between blades.
⑦ A gate block in which a resin inflow space is defined is mounted on the above fixed portion in a direction perpendicular to the blades and on the inner peripheral surface of the gate block, a slit gate which makes the resin inflow space communicate with the respective circular plate fan molding spaces is formed, whereby upon completion of molding, corresponding to the removal operation of a runner formed in the gate block, the connection between the runner and the molded resin in the circular plate fan molding spaces can be automatically terminated by a shearing force.
⑧ A multiplicity of blades have their proximal ends stacked with a desired gap on either of the inner core or the outer core and a retaining portion for retaining the distal ends of the blades is provided on either of the inner core or the outer core which is not provided with blades.
⑨ A multiplicity of blades have their proximal ends stacked with a desired gap on the outer core and a retaining portion for retaining the distal ends of the blades is provided on the inner core and a gate is formed in the inner core which communicate with gaps between the blades through the retaining portion.
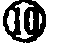 A multiplicity of blades are formed separately and the blades are stacked while interposing a gap retainer between blades.
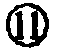 The inner core is made of an expandible and shrinkable collapsible core and a multiplicity of blades are stacked on the outer periphery of the inner core with a desired gap.
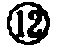 A multiplicity of blades are stacked on the outer core with a desired gap between blades and the outer core is made of separable mold units and each mold unit has recesses on both separating surfaces thereof, whereby, at the time of molding, all the mold units are assembled to make the separating surfaces of each sold unit abut with the separating surfaces of the neighboring mold units so as to define a spacer molding space by abutting recesses.
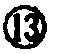 The outer core is made of a plurality of separable core units and each core unit is slidable in a radial direction toward or away from the inner core.
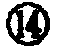 A multiplicity of blades are stacked on either of the inner core or the outer core and a retaining portion for retaining the distal ends of the blades are formed in either of the inner core or the outer core which is not provided with blades and the retaining portion is made of a multiplicity of retainer plates which are separable from each other.
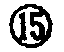 A multiplicity of blades which are arranged with a desired gap between the blades have the distal ends thereof magnetized in the same polarity so that the gaps between the respective blades are held equal making use of the repulsive force exerted by the same polarity.

The second invention discloses a mold for molding a multi-stacked circular plate fan which is characterized in that an outer core which is formed in an annular shape is disposed around an inner core, that a multiplicity of annular thin blades have proximal portions thereof securedly stacked to the inner peripheral surface of the outer core with a narrow gap between blades by means of gap retainers thus forming circular plate fan molding spaces between blades, that a multiplicity of thin retainer plates which are capable of retaining the distal ends of the blades are mounted on the outer peripheral surface of the inner core with a gap between retainer plates by means of gap retainers, that outer core is made of a plurality of separable core units which are slidable radially toward or away from the inner core and capable of forming the outer core in an assembled condition, that gate means for injecting resin into the respective circular plate fan molding spaces in a direction approximately parallel to the blades is provided at a fixed portion of stacked blades of respective core units, that recesses are formed in separating surfaces of the respective blades and these recesses are combined with recesses formed in separating surfaces of neighboring blades to define communicating holes for resin inflow as the core units are assembled at the time of molding, whereby resin can be filled in the respective circular plate fan molding spaces and the communicating holes from the gate means.

The third invention discloses a mold for producing a multi-stacked circular plate fan characterized in that an outer core is disposed around an inner core, that an inner molding surface is formed by providing a plurality of first horizontal grooves and second longitudinal communicating grooves on the inner surface of the outer core, that the inner core is made of an expandible and shrinkable collapsible core, that an outer molding surface is formed by providing a plurality of second horizontal grooves and first longitudinal communicating grooves on the inner surface of the outer core, that the first horizontal grooves and second horizontal grooves are combined to define circular plate fan molding spaces while the first longitudinal communicating grooves and the second longitudinal communicating grooves are combined to define communicating holes for resin inflow, whereby a multi-stacked circular plate fan can be integrally molded.

The fourth invention discloses a method for producing a multi-stacked circular plate fan comprising following steps;
a) a step in which an inner core and an outer core which is made of a plurality of core units are assembled such that a multiplicity of blades mounted on the outer core with a narrow gap between blades have the distal ends thereof come into contact with the outer periphery of the inner core,
b) a step in which resin is injected through a gate formed at a proximal portion of the outer core and resin is injected subsequently into the gap between the stacked blades and/or communicating holes for resin inflow formed in respective blades in a direction parallel to the blades from the gaps at the proximal portions of the blades,
c) a step in which, after resin being solidified, the core units slide radially outwardly to separate from each other and to retract the outer core from the inner core so that the blades of the molds units are removed from a molded multi-stacked circular plate fan, and
d) a step in which the molded multi-stacked circular plate fan supported on the inner core is removed from the inner core.

The second step b) of the fourth invention can be replaced with a step in which communicating holes for resin inflow are formed in a multiplicity of blades formed at least either of the outer core or the inner core and the resin is injected through the communicating holes for resin inflow into the gaps formed between blades and the communicating holes for resin inflow.

In this invention, for integrally injecting a multi-stacked fan with resin, the inner core and the outer core which are separate from each other are assembled to form a mold for molding a multi-stacked circular plate fan. Due to this assembling operation, gaps for molding circular plates of the multi-stacked circular plate are defined, while these gaps formed between the circular plates are communicated by way of communicating holes for resin inflow formed in the blades. Thereafter, with an injection molding, resin is integrally injected into the communicating holes in resin inflow as well as the circular plate fan molding spaces and hardened. When the resin is sufficiently solidified, the inner core and the outer core are separated from each other so as to separate the blades from an molded article. Thus, a multi-stacked circular plate fan provided with circular plates which has both inner and outer peripheral portions thereof open-ended as well as spacers can be molded (refer to claim 1).

In the above-mentioned mold for molding a multi-stacked circular plate fan, the blades are stacked with a narrow gap between blades by means of gap retainers interposed at the proximal portions of the blades (refer to claim 10). The distal ends of the blades mounted on either of the inner core or the outer core come into contact with the retaining portion of either of the inner core or the outer core on which blades are not mounted (refer to claim 8) so that the outer periphery of the inner core come into contact with the inner periphery of the outer core (refer to claim 2).

The retaining portion of the either of the inner core or the outer annular mold can be made of a multiplicity of retainer plates which are formed as separate elements from each other (refer to claim 14).

Making the distal ends of the blades magnetized and holding the gap between blades accurately making use of this magnetization, the retainer portion may be obviated (refer to claim 15).

In assembling the inner core and the outer core which are separated from each other, either of the inner core or the outer core can be made of a plurality of core units and these core units are slid radially to be assembled (refer to claim 3 and claim 13). In this assembled condition, the recesses formed in the separate surfaces of the blades of the core units are combined with the recesses formed in the separate surfaces of neighboring blades to form communicating holes for resin inflow which work as spacer molding portions (refer to claim 12).

Namely, when the core units of either the inner or outer core are assembled, a mold for molding a multi-stacked circular plate fan which is provided with annular-circular-plate-shaped blades and communicating holes for resin inflow which work as spacer molding space can be formed.

As a method for injecting resin in the mold which uses core units, after assembling the core units, resin can be injected from the communicating holes for resin inflow to the respective gaps formed between blades and spacer molding spaces in a direction perpendicular to the communicating holes for resin inflow (refer to claim 4).

As another method for injecting resin, resin can be injected from gates which are formed respectively corresponding to most of the circular plate molding spaces (refer to claim 6).

As still another method for injecting resin, a fixed-side portion is provided at the proximal ends of the blades and resin can be injected from the fixed-side portion (refer to claim 7) and resin is injected into the gaps in a direction approximately parallel to the blades (refer to claim 5).

As still further method for injecting resin, a gate can be formed in a retainer-side portion of the inner core which is provided for retaining the distal ends of the blades and resin is injected from the gate and is filled in the gap between blades and spacer molding spaces (refer to claim 9).

In the operation for removing a molded article, the core units of either the inner core or the outer core are slid radially so as to remove a multi-stacked circular plate fan as the molded article.

If the mold is provided with blades for forming circular plates on both the inner core and the outer core and the inner core is made of a collapsible core, for removing a molded article, the inner core is shrinked to remove the inner core from the molded article and the core units of the outer core are slid outwardly to remove the outer annular mold from the molded article thus producing a multi-stacked circular plate fan (refer to claim 11).

### BRIEF DESCRIPTION OF THE DRAWINGS

Fig. 1 is a longitudinal cross-sectional view of a mold for molding a multi-stacked circular plate fan of the first embodiment according to this invention.

Fig. 2 is a perspective view of the substantial part of the mold.

Fig. 3 is a plan view of the substantial part of the mold.

Fig. 4 is a perspective view of the outer core unit.

Fig. 5 is a perspective view of an inner core.

Fig. 6 is an enlarged cross-sectional side view of the mold showing an assembled body of the inner core and the core units.

Fig. 7 is an enlarged cross-sectional side view of the mold showing the assembled body made of the inner core and the core units.

Fig. 8 is an explanatory view showing steps of the method for producing a multi-stacked circular plate fan.

Fig. 9 is a plan view with a part broken away of an assembled body of the inner core and core units in a step 1 of the method for producing a multi-stacked circular plate fan.

Fig. 10 is an enlarged plan view of the assembled body.

Fig. 11 is a fragmentary perspective view of blades and blade retaining rings.

Fig. 12 is an explanatory view showing the manner of removing a runner R in a step 2 of the method for producing a multi-stacked circular plate fan.

Fig. 13 is an enlarged plan view of a gate block.

Fig. 14 is an enlarged cross-sectional side view of the gate block.

Fig. 15 is a cross-sectional view of a multi-stacked circular plate fan produced by the mold for producing a multi-stacked circular plate fan according to this embodiment.

Fig. 16 is a cross-sectional view of the multi-stacked circular plate fan in an arrow direction taken along a line I - I of Fig. 15.

Fig. 17 is an explanatory view showing a modification of manner of injecting resin.

Fig. 18 is an explanatory view showing a modification of manner of injecting resin.

Fig. 19 is a plan view of an improvement of the mold for molding a multi-stacked circular plate fan of the embodiment 1.

Fig. 20 is an enlarged explanatory view of an essential part of the mold.

Fig. 21 is a plan view of a multi-stacked circular plate fan produced by the mold for molding a multi-stacked circular plate fan.

Fig. 22 is a longitudinal cross-sectional view of a mold for molding a multi-stacked circular plate fan of the second embodiment 2.

Fig. 23 is a transverse cross-sectional view of the mold taken along the line II - II of Fig. 22.

Fig. 24 is an explanatory view of the essential part of the mold in Fig. 23.

Fig. 25 is a fragmentary perspective view of the inner core.

Fig. 26 is a step of a method for producing a multi-stacked circular plate fan.

Fig. 27 is a step of a method for producing a multi-stacked circular plate fan.

Fig. 28 is a step of a method for producing a multi-stacked circular plate fan.

Fig. 29 is a step of a method for producing a multi-stacked circular plate fan.

Fig. 30 is a step of a method for producing a multi-stacked circular plate fan.

Fig. 31 is a step of a method for producing a multi-stacked circular plate fan.

Fig. 32 is a step of a method for producing a multi-stacked circular plate fan.

Fig. 33 is a step of a method for producing a multi-stacked circular plate fan.

Fig. 34 is a step of a method for producing a multi-stacked circular plate fan.

Fig. 35 is a step of a method for producing a multi-stacked circular plate fan.

Fig. 36 is a step of a method for producing a multi-stacked circular plate fan.

Fig. 37 is a step of a method for producing a multi-stacked circular plate fan.

Fig. 38 is a step of a method for producing a multi-stacked circular plate fan.

Fig. 39 is a plan view of a multi-stacked circular plate fan produced by a mold for molding a multi-stacked circular plate fan.

Fig. 40 is a longitudinal cross-sectional view of the mold for producing a multi-stacked circular plate fan showing the essential part of the embodiment.

Fig. 41 is an enlarged explanatory view of the mold.

Fig. 42 is a cross-sectional view taken along the line III - III of Fig. 40.

Fig. 43 is a fragmentary perspective view of an inner core.

Fig. 44 is an explanatory view showing a step of method for producing a multi-stacked circular plate fan with a mold for producing a multi-stacked circular plate fan.

Fig. 45 is a longitudinal cross-sectional view of a blower provided with a conventional multi-stacked circular plate fan.

Fig. 46 is a cross-sectional view taken along the line IV - IV of Fig. 45.

### BEST MODE FOR CARRYING OUT THE INVENTION

Hereinafter, a mold for molding a multi-stacked circular plate fan and a method for molding a multi-stacked circular plate fan with the mold are explained in view of first to third embodiments shown in the attached drawings.

In the first to third embodiments, the mold is for molding a multi-stacked circular plate fan which can be used as an air blower fan.

Prior to the explanation of the first to third embodiments, the construction of a multi-stacked circular plate fan A integrally molded by the mold of this invention, the basic construction of the mold C and the method of producing the multi-stacked circular plate fan are briefly explained.

### (Construction of the multi-stacked circular plate fan A)

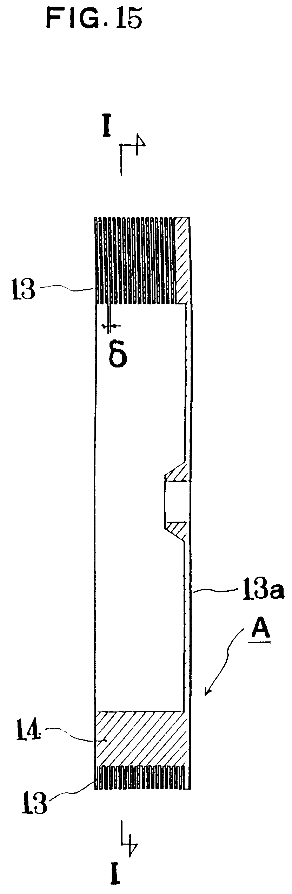

As shown in Fig. 15, the multi-stacked circular plate fan A is made by stacking a multiplicity of thin annular circular plates 13 having a thickness of 0.3 mm ∼ 0.6 mm with a desired gap δ (= 0.5 mm ∼ 1.5 mm ) so that the fan can generate an air flow by making use of an air friction generated on the surfaces of the circular plates 13 enabling a silent operation of the multi-stacked circular plate fan A. In Fig. 15, numeral 13a indicates a mounting plate forming a part of the multi-stacked circular plate fan A.

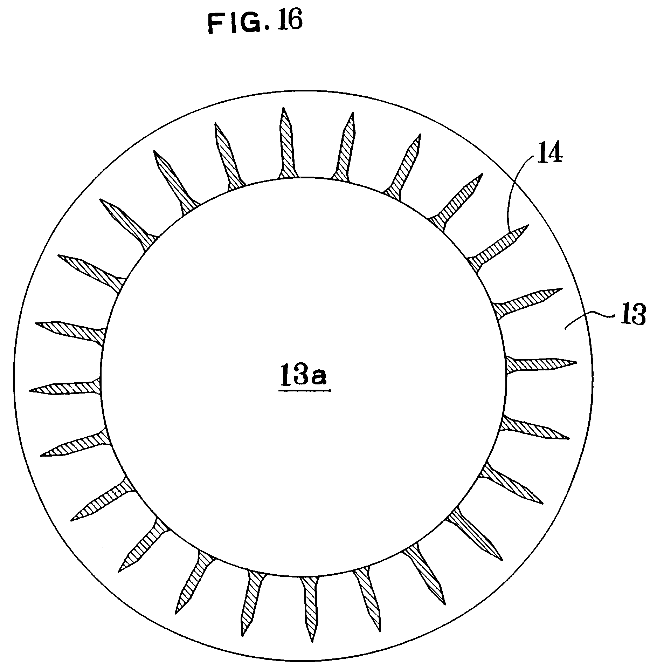

While assuring a desired gap δ between the annular circular plates 13, 13, air is smoothly flown from the inner periphery to the outer periphery. To increase the fan volume, as shown in Fig. 16, a plurality of vanes which work also as spacers 14 are interposed between annular circular plates 13, 13.

As can be readily understood from Fig. 15 and Fig. 16, the above-mentioned multi-stacked circular plate fan A can be produced by an injection molding with a molding apparatus C which will be explained hereinafter. Namely, all the components of the multi-stacked circular plate fan A can be integrally molded.

### (Basic structure of Mold C for molding a multi-stacked circular plate fan)

The basic structure and features of a mold for molding a multi-stacked circular plate fan which forms the gist of this invention and its features are explained hereinafter in conjunction with attached drawings.

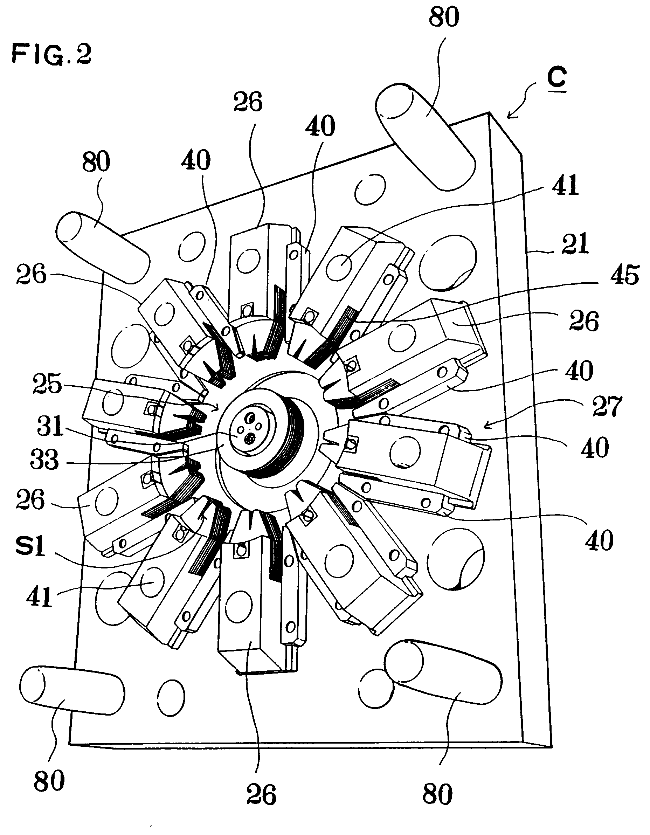

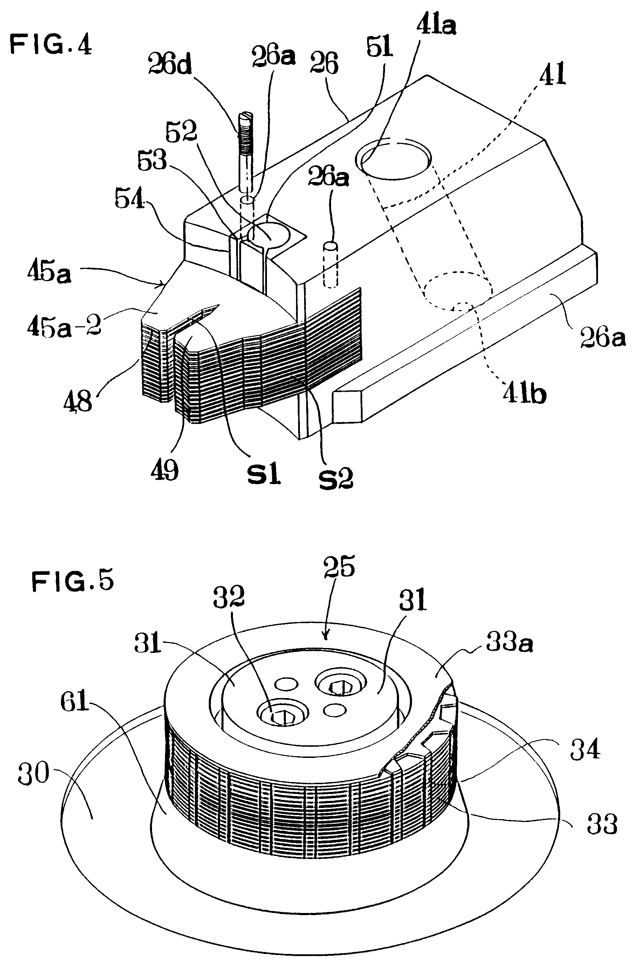

In this invention, as best shown in Fig. 2 and Fig. 4, a mold C for molding a multi-stacked circular plate fan is characterized in that a resin mold for molding the multi-stacked circular plate fan A is made of an inner core 25 and an outer core 27 which are separated from each other, that the outer core 27 is provided with a multiplicity of thin blades 45 stacked with a desired minute or narrow gap and communication holes 90 for resin inflow which are formed in the respective blades 45, and that the gap between the blades 45, 45 corresponds to a thickness of the circular plate 13 of the multi-stacked circular plate fan A to be molded and the thickness of the blade 45 corresponds to the gap between the circular plates 45, 45 of the multi-stacked circular plate fan A to be molded.

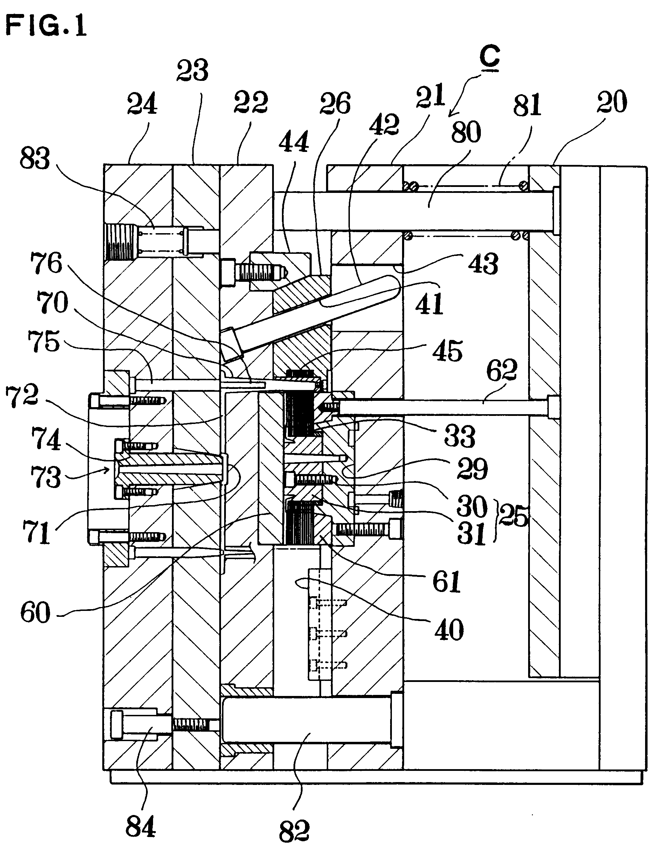

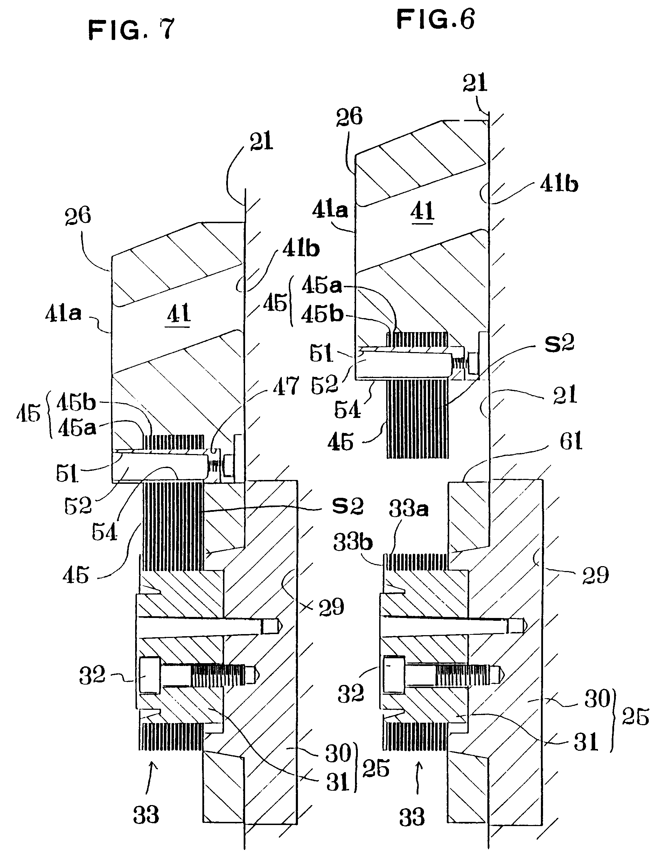

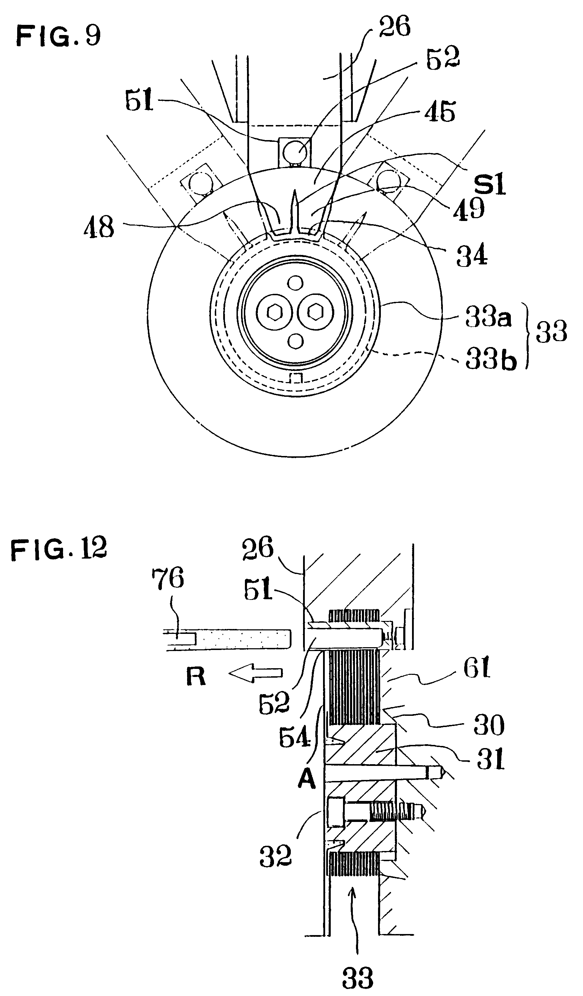

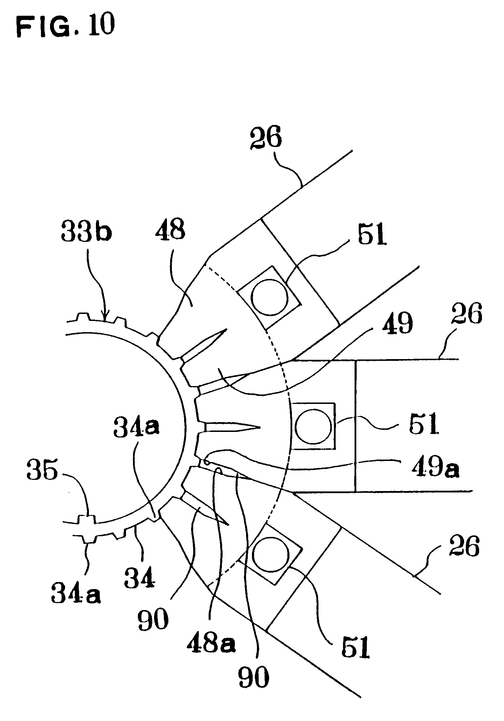

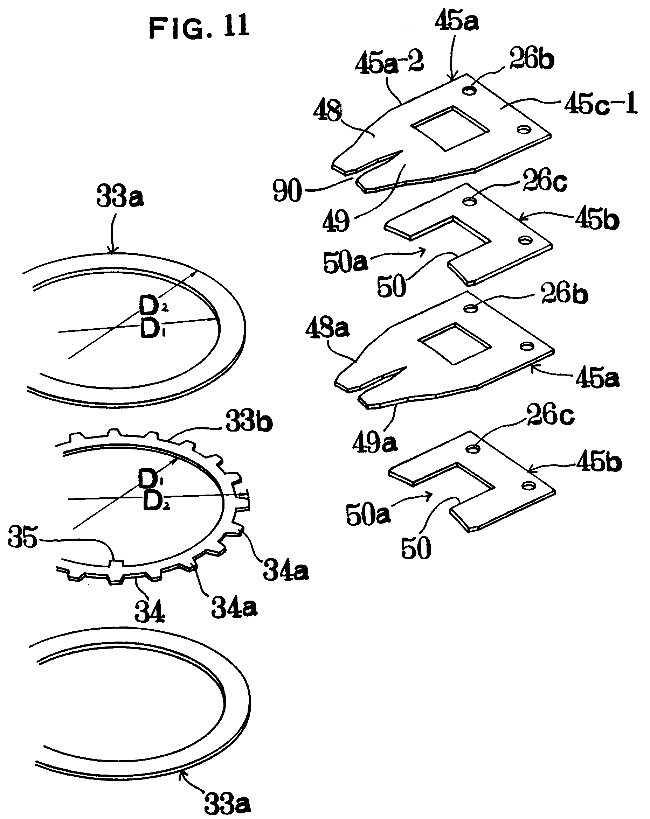

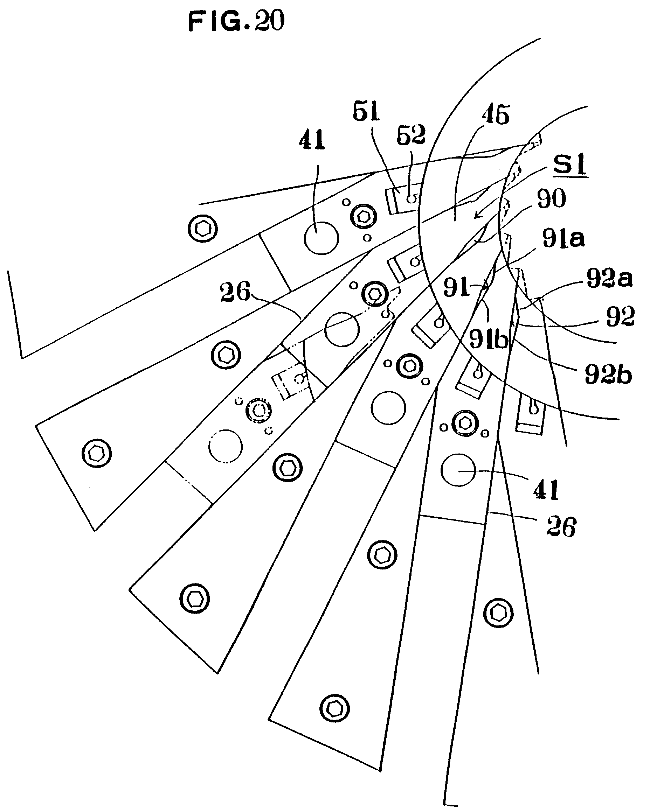

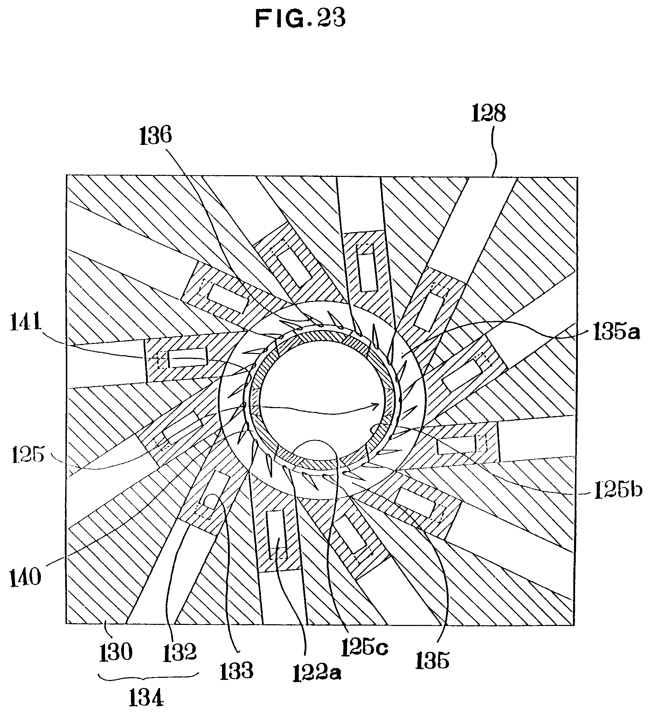

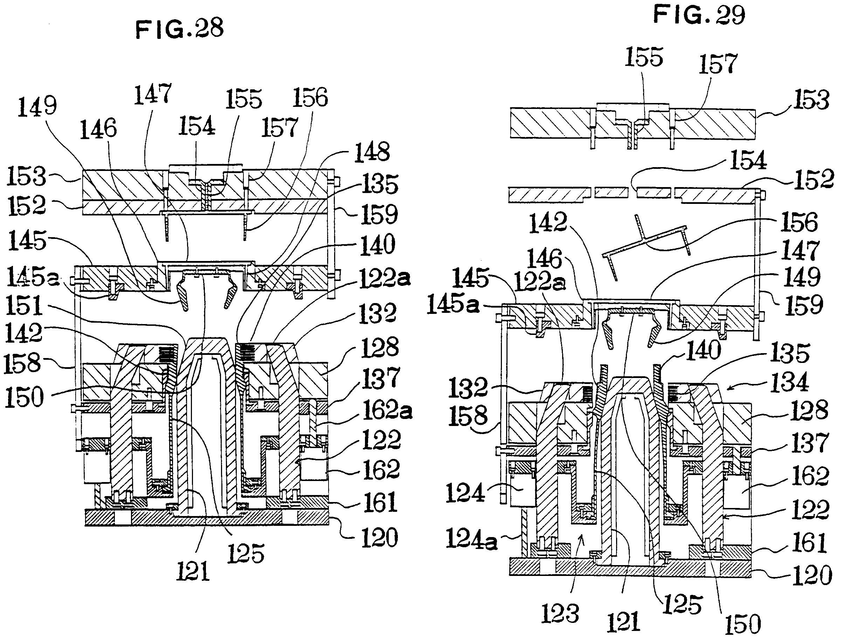

This invention is also characterized in that the mold C is constructed as follows.
① As shown in fig. 7, the outer periphery of the inner core 25 and the inner periphery of the outer core 27 are constructed such that these peripheries come into contact with each other at the time of molding of the multi-stacked circular plate fan A.
② As shown in Fig. 2, the outer core 27 is made of a plurality of separable core units 26 and these core units 26 are slidable so that they can be assembled at the time of molding to form the outer core 27 and can be separated from each other at the time of removing the molded multi-stacked fan from the mold.
③ As shown in Fig. 20, Fig. 21 and Fig. 23 to Fig. 36, the communication holes 136, 142 for resin inflow are formed in the blades 135a mounted on the outer core 134 and the annular horizontal brim portions 142 of the inner core 125, and these communication holes 136, 141 define spacer molding portions S1 interposed between the annular circular plates 13,13. The resin is injected from the communication holes 136, 141 for resin inflow and is filled in gaps defined between blades 135a, 135a and the spacer molding spaces S1.
④ As shown in Fig. 7, in injecting the resin into the gaps between stacked blades 45, 45 mounted on the outer core 27, the resin is injected in a direction approximately parallel to each blade 45.
⑤ As shown in Fig. 2. The gaps formed between a multiplicity of blades 45, 45 mounted on the outer core 27 define circular plate molding spaces S2 and most of these circular plate molding spaces S2 are respectively provided with gates 54 for injecting resin.
⑥ As shown in Fig. 6, a multiplicity of blades 45 have their proximal portions thereof fixed so as to assure a narrow gap between blades and a gate 51 is provided at a fixed portion to inject resin into gaps between blades 45, 45.
⑦ As shown in Fig. 6, the gate block 51 in which a resin inflow space 52 is defined is mounted on the above fixed portion in a direction perpendicular to the blades 45 and on the inner peripheral surface of the gate block 51, a slit gate 54 which make the resin inflow space 52 communicate with the respective circular plate fan molding spaces S2 defined between blades 45,45 is formed, whereby upon completion of molding, corresponding to the removal operation of a runner formed in the gate block 51, the connection between the runner and the molded resin in the circular plate fan molding spaces S2 can be automatically terminated by a shearing force.
⑧ As shown in Fig. 6, a multiplicity of blades 45 have their proximal ends stacked with a narrow gap on the outer core 27 and a retaining portion 34 including blade insert grooves 34 for retaining the distal ends of the blades 45 is provided on the inner core 25.
⑨ Although not shown in drawings, a multiplicity of blades 45 have their proximal ends stacked with a desired gap on the outer core 27 and a retaining portion 34 for retaining the distal ends of the blades 45 is provided on the inner core 25 and a gate is formed in the inner core 25 which communicate with gaps between the blades 45, 45 through the retaining portion.
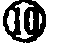 As shown in Fig. 11, a multiplicity of blades 45 are formed of independent blade elements 45a and blade elements 45a are stacked while interposing a gap retainer 45b between blades.
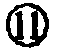 As shown in Fig. 23, the inner core 125 is made of a collapsible core and a multiplicity of blades 140a are stacked on the outer periphery of the inner core 125 with a desired gap.
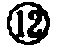 As shown in Fig. 10, a multiplicity of blades 45 are stacked on the outer core 27 with a desired gap between blades 45, 45 and the outer core 27 is made of separable core units 26 and each core unit 26 has recesses 48a, 49a on both separating surfaces thereof, whereby, at the time of molding, all core units 26 are assembled to make the separating surfaces of each core unit abut with the separating surfaces of the neighboring core units 26 so as to define a spacer molding space S1 by abutting recesses 48a, 49a.
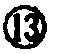 As shown in Fig. 2, Fig. 6 and Fig. 7, the outer core 27 is made of a plurality of separable core units 26 and each core unit 26 is slidable in a radial direction toward or away from the inner core 25.
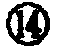 As shown in Fig. 9 to Fig. 11, a multiplicity of blades 45 are stacked on the outer core 27 and a retaining portion 34 for retaining the distal ends of the blades 45 are formed in the inner core and the retaining portion 34 is made of a multiplicity of retainer plates 33a,33b which are separable from each other.
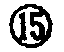 Although not shown in drawings, a multiplicity of blades 45 which are arranged with a desire gap between the blades 45 may have the distal ends thereof magnetized in the same polarity so that the gaps between the respective blades 45, 45 can be held equal making use of the repulsive force exerted by the same polarity.
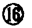 As shown in Fig. 1, Fig. 2, Fig. 6 and Fig. 7, the outer core 27 which is formed in an annular shape is disposed around the inner core 25. A multiplicity of annular thin blades 45 have proximal portions thereof securedly stacked to the inner peripheral surface of the outer core 27 with a narrow gap between blades 45, 45 by means of gap retainers thus forming circular plate fan molding spaces S2 between blades. A multiplicity of thin retainer plates 33a, 33b which are capable of retaining the distal ends of the blades 45, 45 are mounted on the outer peripheral surface of the inner core 25 with a gap between retainer plates 33a, 33b by means of gap retainers. The outer core 27 is made of a plurality of separable core units 26 which are slidable radially toward or away from the inner core 25 and capable of forming the outer core 27 in an assembled condition. A gate 54 for injecting resin into the respective circular plate fan molding spaces S2 in a direction approximately parallel to the blades 45 is provided at a fixed portion of stacked blades 45 of respective core units 26. Recesses 48a, 49a are formed in separating surfaces of the respective blades 45 and these recesses 48a, 49a are combined with recesses 49a, 48a formed in separating surfaces of neighboring blades 45 to define communicating holes S1 for resin inflow as the core units 26 are assembled at the time of molding, whereby resin can be filled in the respective circular plate fan molding spaces S2 and the communicating holes S1 from the gate 54.

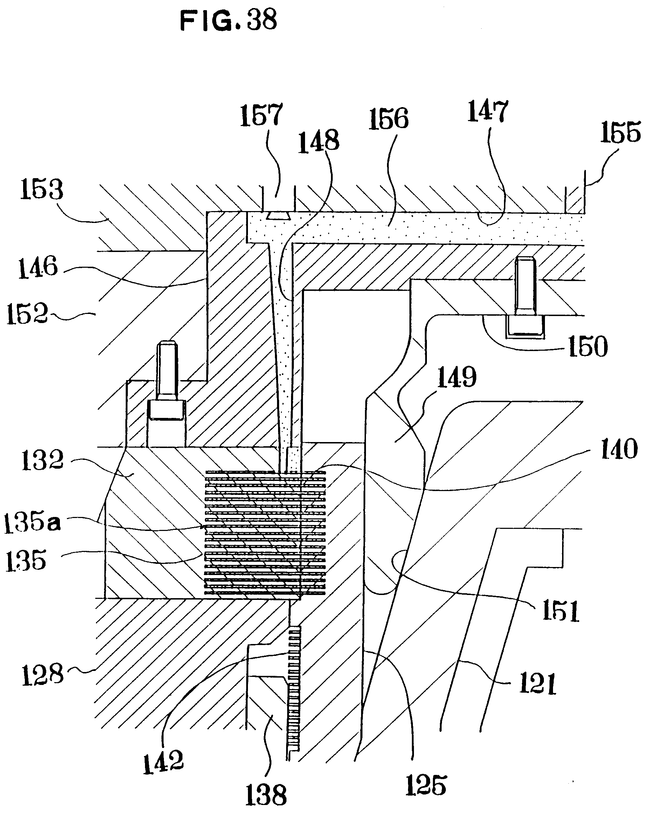

As shown in Fig. 38 to Fig. 42, an outer core 234 is disposed around an inner core 232. An inner molding surface is formed on the inner surface of the outer core 134 by providing a plurality of first horizontal grooves 235 and second longitudinal communicating grooves 236. The inner core 232 is made of an expandible and shrinkable collapsible core and an outer molding surface is formed on the outer peripheral surface of the inner core 232 by providing a plurality of second horizontal grooves 240 and first longitudinal communicating grooves 241. The first horizontal grooves 235 and second horizontal grooves 240 are combined to define circular plate fan molding spaces S2 while the first longitudinal communicating grooves 241 and second longitudinal communicating grooves 236 are combined to define communicating holes S1 for resin inflow, whereby a multi-stacked fan A can be integrally molded.

### (Method of producing a multi-stacked circular plate fan A)

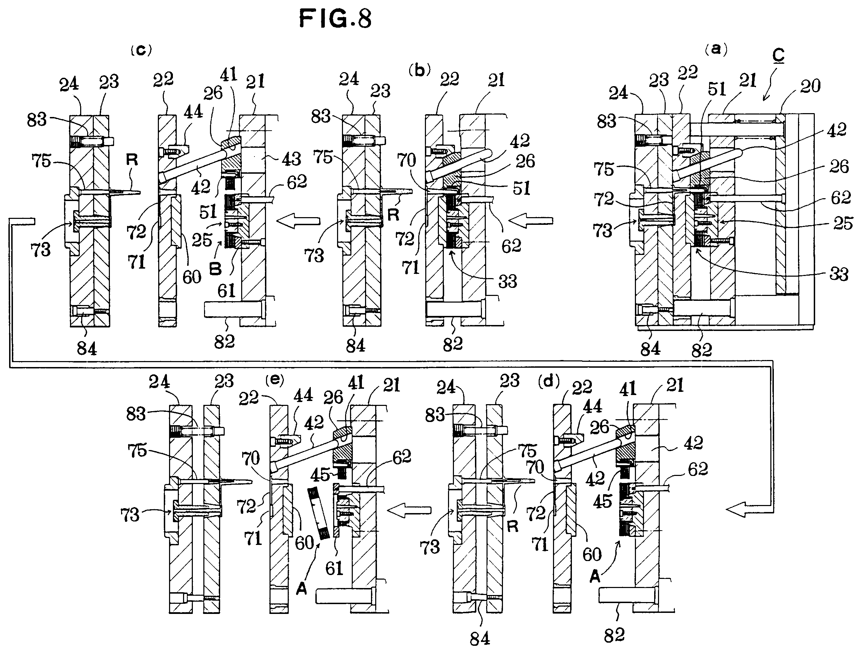

The gist of the method for producing a multi-stacked circular plate fan according to this invention has following steps as shown in Fig. 8.
a) a step in which an inner core 25 and an outer core 27 which is made of a plurality of core units 26 are assembled such that a multiplicity of blades 45 mounted on the outer core 27 with a narrow gap between blades 45, 45 have the distal ends thereof come into contact with the outer periphery of the inner core 25,
b) a step in which resin is injected through a gate 54 formed at a proximal portion of the outer core 27 and resin is injected subsequently into the gap between the stacked blades 45, 45 and/or communicating holes 90 for resin inflow formed in respective blades 45 in a direction parallel to the blades 45 from the gaps at the proximal portions of the blades 45,
c) a step in which, after resin being solidified, the core units 26 slide radially outwardly to separate from each other and to retract the outer core 27 from the inner core 25 so that the blades 45 of the core units 25 are removed from a molded multi-stacked circular plate fan A, and
d) a step in which the molded multi-stacked circular plate fan A which is held on the inner core 25 is removed from the inner core 25.

In the above method for producing a multi-stacked circular plate fan A, as shown in Fig. 38 to Fig. 40, the second step b) can be replaced with a step in which communicating holes 236, 241 for resin inflow are formed in a multiplicity of blades 235a, 240a formed at least either of the outer core 228 or the inner core 221 and the resin is injected through the communicating holes 236, 241 for resin inflow into the gaps formed between blades 235a, 240a and the communicating holes 236, 241 for resin inflow.

### (First Embodiment)

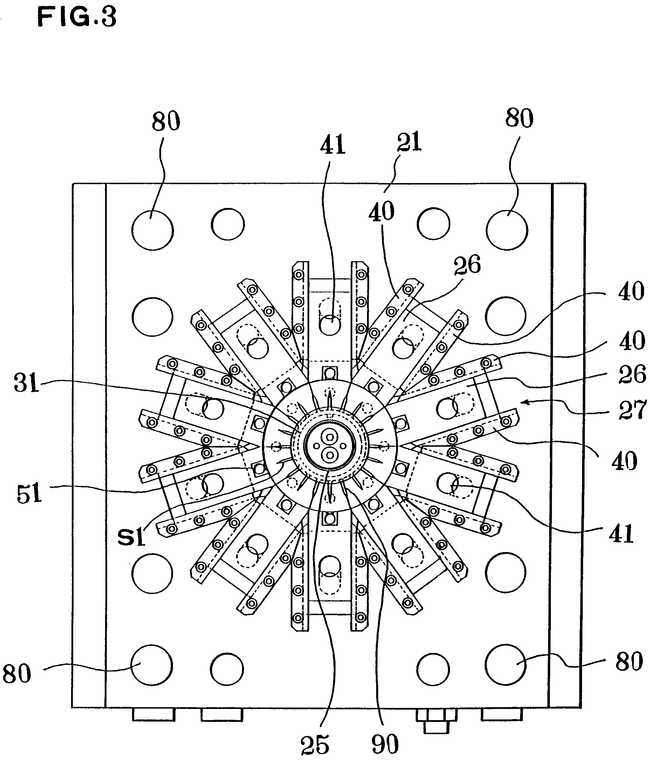

The mold C for producing multi-stacked circular plate fan according to this embodiment will be concretely explained in conjunction with Fig. 1 to Fig. 7.

Firstly, the entire construction of the mold C for producing multi-stacked circular plate fan according to this embodiment will be explained in view of Fig. 1 and Fig. 2.

In Fig. 1, numeral 20 indicates a movable carrier which is arranged in an upright position and is movable by any moving device which is not shown in the drawings. At one side (left side in Fig. 1) of the movable carrier 20 are disposed a movable-side plate 21, a third fixed-side plate 22, a second fixed-side plate 23 and first fixed-side plate 24 are disposed parallel to the movable carrier 20.

The movable-side plate 21, as shown in Fig. 2, is provided with an inner core 25 at the center of a fixed-side face thereof and an outer core 27 made of a plurality of core units 26 concentrically disposed around the inner core 25 on the same face thereof.

The gist of the invention lies in a combination of the inner core 25 and an outer core 27 and this is explained hereinafter in view of Fig. 1 to Fig. 7.

To explain the inner core 25, as shown in Fig. 1, Fig. 5, Fig. 6 and Fig. 7, the inner core 25 comprises a circular plate-like core base 30 which is snugly fit into a recess 29 formed at the center of one side of the movable-side plate 21 and a core body 31 made of a circular stud shaft which is integrally and coaxially mounted on the upper portion of the core base 30 by fastening bolts 32.

As shown in Fig. 5, Fig. 6 and Fig. 7, the core body 31 is provided with a multiplicity of blade support rings 33 which are stacked with a narrow parallel gap in an axial direction.

As shown in Fig. 5 and Fig. 11, the blade support ring 33 consists of two kinds of blade support rings 33a, 33b and these rings 33a, 33b have the same inner diameter D1 and the same outer diameter D2.

As shown in Fig. 11, the first blade support rings 33a are made of thin annular discs or circular plates having a constant uniform width w in a radial direction. Although, as shown in Fig. 11, the second blade support rings 33b are made of thin annular circular plates having the same outer diameter D2 and the same diameter D1 as the first blade support rings 33b, the second blade support rings 33b are provided with blade inserting recesses 34, 34 on the outer periphery thereof at a desired interval in a circumferential direction and a retaining protrusion 34a is formed between the blade inserting recesses 34, 34.

As will be explained later in view of Fig. 10 and Fig. 11, into these blade inserting recesses 34, 34, a pair of insert 48, 49 which are formed in distal ends of ring-inserting portions 45a-2 of blades 45 are inserted, while these blades 45 are mounted in a stacked manner on the inner surface of the core unit 26.

Furthermore, as shown in Fig. 11, the second blade support rings 33b are provided with positioning protrusions 35 on the inner surface thereof.

Although not shown in drawings, the blade support rings 33 can be fixedly mounted on the core body 31 with securing pins.

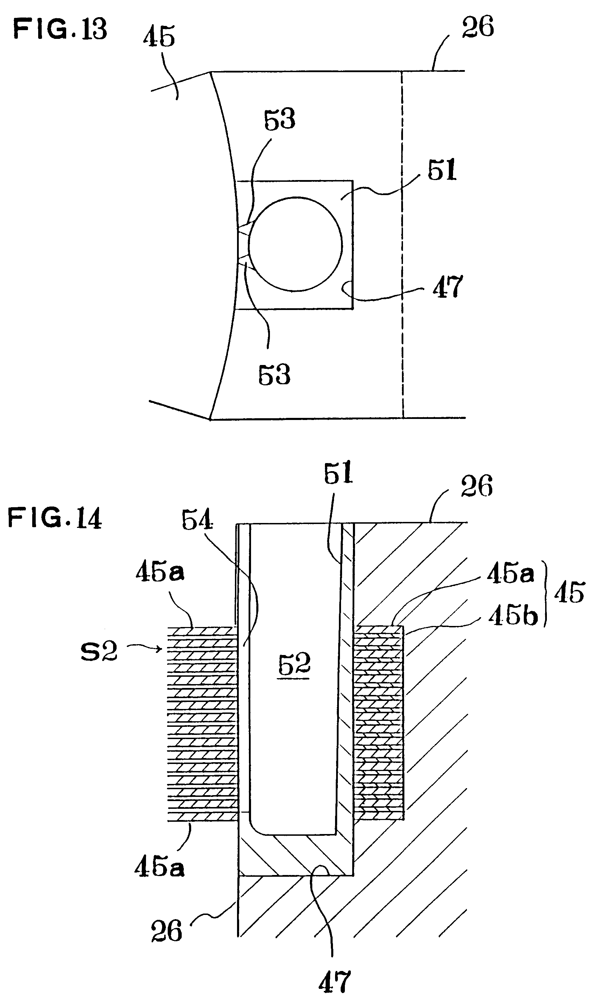

The outer core 27 which is made of a plurality of core units 26 is explained in detail in view of Fig. 1, Fig. 2, Fig. 3 and Fig. 4 to Fig. 14.

As can be most understood from Fig. 2, the outer core 27 comprises a plurality of core units 26 which are radially arranged around the inner core 25 in a circumferentially spaced apart manner.

Each core unit 26, as shown in Fig. 2, Fig.3 and Fig. 4, is substantially made of a rectangular block which is provided with slide guide portions 26a at the lower portions of both sides thereof, while the slide guide portions 26a are slidably engaged with a pair of guide members 40 fixedly secured to the movable-side plate 21. Accordingly, each core unit 26 can be moved toward or away from the inner core 25 along the guide members 40.

A mechanism for moving the core units 26 toward or away from the inner core 25 in a radial direction is constructed as follows.

As shown in Fig. 1 and Fig. 4, each core unit 26 is provided with a slanted pin insert hole 41 and the hole 41 is inclined in such a manner that the portion of the hole 41 becomes remoter from the center of the inner core 25 as it shifts from an upper opening 41a thereof to a lower opening 41b thereof.

Meanwhile, as shown in Fig. 1, on the movable-side of the third fixed-side plate 22 which faces the movable-side plate 21 provided with the core units 26 thereon, proximal ends of a plurality of slanted pins 42 are mounted in the same circumferential interval as the above-mentioned core units 26 and these inclined pins 42 are, as shown in the drawing, slidably passes through slanted pin insert holes 41 mounted on the core units 26.

Due to such a construction, as shown in Fig. 8, in case the movable-side plate 21 is parallely moved away from the third fixed-side plate 22, the slanted pin 42 also is removed from the slanted pin insert hole 41. Since the slanted pin 42 is engaged with the slanted pin insert hole 41 in an inclined manner, corresponding the parallel movement of the slanted pin 42, the core unit 26 receives a force in a radial direction and this force moves the core unit 26 in a direction away from the inner core 25.

To the contrary, in case that the movable-side plate 21 is moved toward the third fixed-side plate 22, the core unit 26 is forced to move toward the inner core 25.

At a portion of the movable-side plate 21 with which the core unit 26 slidably come into contact, a hole 43 is formed not to hinder the slide movement of the slanted pin 42 in the slanted pin insert hole 41.

Furthermore, as shown in Fig. 1, on the movable-side face of the third fixed-side plate 22, stoppers 44 which restrict the radially outwardly movement of the core unit 26 are mounted.

On the inner surface of the core unit 26, as shown in Fig. 2 and Fig. 4 to Fig. 7, proximal ends of a multiplicity of thin blades 45 are fixedly mounted in a stacked and a canti-lever manner with a narrow parallel gap in an axial direction.

In this embodiment, as shown in Fig. 4, the blades 45 are fixedly secured in such a manner that a pair of threaded holes 26a are formed in the block body of the core unit 26 at a position which corresponds to the rear ends of the blades 45, while a pair of apertures 26b, 26c are formed in the rear ends of the blades 45a, 45b which will be described later in view of Fig. 11. As shown in Fig. 4, stud bolts 26d have non-threaded portions thereof pass through the apertures 26b, 26c and threaded portions thereof meshed with the threaded holes 26a.

To explain the construction of the blades 45 in further detail, the blade 45, as shown in Fig. 11, consists of two kinds of blades 45a, 45b.

The first blade 45a, as shown in Fig. 4 and Fig. 11, has the same width as the core unit 26 and is made of a proximal portion 45a-1 which is disposed in a rectangular recess formed in the inner rear face of the core unit 26 and an approximately isosceles triangular ring-insert portion 45a-2 which is integrally formed with the proximal portion 45a-1.

At the proximal portion 45a-1 of the first blade 45a, a rectangular-shaped block insert opening 47 is formed, into which a gate block 51 which will be explained later is inserted.

The first blade 45a is provided with a pair of symmetrical left and right insert portions 48, 49 at the inner extremities thereof.

These insert portions 48, 49 are, as shown in Fig. 10 and Fig. 11, inserted into insert holding recesses 34 provided on the the outer periphery of the second blade support ring 33b which are sandwitched between the first blade support rings 33a, 33a.

Due to such a construction, the widthwise movement of the insert portions 48, 49 are completely prevented by the protrusions 34a provided on the outer periphery of the second blade support rings 33b, while the vertical movement of the insert portions 48,49 are completely prevented by the first blade support rings 33a, 33a.

Accordingly, the first blade 45a is fixedly held not only at the proximal portion thereof but also at the distal end thereof so that at the time of injecting resin into a space between the first blades 45a, 45a, the blade 45a can sufficiently withstand the injection pressure, thus enabling the accurate molding of the annular discs 13 of the multi-stacked circular plate fan A.

At the central part of the ring insert portion 45a-2, a communicating hole 90 for resin inflow is formed, while recesses 48a, 49a are formed at both side peripheries of the ring insert portion 45a-2.

These recesses 48a, 49a are, as shown in Fig. 10, combined with recesses 49a, 48a formed at both side peripheries of the ring insert portion 45a-2 of the neighboring first blade 45a to define another communicating hole 90 for resin flow.

As shown in Fig. 2, in case the first blades 45a are stacked together, these communicating holes 90 for resin flow define a spacer forming portion or space S1 which extends in an axial direction.

The second blades 45b, as shown in Fig. 11, have the same width as the first blades 45a and are respectively provided with rectangular block inserting grooves 50 for allowing the passing through of a gate block 51 which will be described later. These block inserting grooves 50 are aligned with block inserting holes 47 of the first blades 45a in case the first blades 45a and the second blades 45b are stacked.

The second blades 45b are provided for holding a gap between the first blades 45a, 45a at a desired amount. The second blades 45b can be prepared as elements independent from the first blades 45a and stacked alternately so that the accuracy of the size of the blades 45 are enhanced and the blades 45 can be readily assembled so as to define a multiplicity of narrow but uniform circular plate molding spaces S2. Furthermore, in case a part of the blade 45a is broken, the maintenance of the molded product including the replacement of the blade 45a can be readily carried out.

At the proximal ends of the blades 45, a rectangular shaped sleeve-like gate block 51 passes through the above-mentioned block inserting holes 47 and the block inserting grooves 50.

This gate block 51 is provided with a resin inflow space 52 inside thereof, which in turn, as shown in Fig. 4 to Fig. 7 and Fig. 11, communicate with the circular plate molding spaces s2 defined between the first blades 45a, 45a and an opening 50a of the block inserting groove 50 by way of a gate 54 formed on the inner side surface respectively.

The circular plate fan molding spaces S2 are communicated with each other by way of the communicating holes 90 for resin inflow formed in the ring inserting portions 45a-2 of the first blade 45a.

Furthermore, to explain other constructions around an assembled body made of the inner core 25 and the core units 26, as shown in Fig. 1, a disc-like fixed core 60 is mounted on the central portion of the third fixed-side plate 22. At a position shown in Fig. 1, the fixed-side core 60 comes into contact with an upper surface of the core body 31 of the inner core 25.

Still furthermore, as shown in Fig. 1, a mechanism for removing mold which is used for removing a molded article from the inner core 25 after completion of a molding operation is mounted on the inner core 25. The construction of the mechanism is explained hereinafter.

Namely, an annular strip plate 61 is axially movably mounted around the core base 30 of the inner core 25, while a strip rod 61 which extends from the movable carrier 20 has the distal end thereof connected with the strip plate 61.

To explain the resin inflow passages for injecting molding resin into each circular plate fan molding space S2 defined between blades 45, 45 and each spacer molding space S1, in a molding condition as shown in Fig. 1, a longitudinal through hole 70 for resin inflow is formed in the third fixed-side plate 22 at a position which corresponds to the position of each gate block 51 mounted on the core unit 26.

Furthermore, at a central portion of one side of the third fixed-side plate 22 which comes into contact with the second fixed-side plate 23, a central recess 71 for resin inflow is formed in, while the central recess 71 for resin inflow communicates with above-mentioned longitudinal hole 70 for resin flow by way of a plurality of runners 72 which are arranged radially.

Meanwhile, at the central portions of the first fixed-side plate 24 and the second fixed-side plate 23, an injecting nozzle 74 which defines a resin inflow passage 73 therein is mounted and this resin inflow passage 73 communicates with the above-mentioned central recess 71 for resin inflow.

Accordingly, resin which is fed into the resin inflow passage 73 of the injection nozzle 74 by way of a pressurized supply passage not shown in the drawings is subsequently fed into the circular plate fan molding spaces S2 defined between the blades 45, 45 and the spacer molding spaces S1 by way of the central recess 71 for resin inflow, the runner 72, the longitudinal hole 70 for resin inflow and the slit gate 54 mounted on the inner surface of the gate block 51.

Furthermore, as shown in Fig. 1, a runner lock pin 75 passes through the, first fixed-side plate 24 and the second fixed-side plate 23 and the distal end 76 of the lock pin 75 extends into the longitudinal hole 70 for resin flow mounted on the third fixed-side plate 22.

Furthermore, to explain other constructions of the mold C for molding a multi-stacked circular plate fan according to this embodiment in view of Fig. 1, numeral 80 indicates a support rod which cooperatively and resiliently mount the movable-side plate 21 to the movable carrier 20 along with springs 81. Numeral 82 indicates guide rods which guide the slide movement of movable-side plate 21 relative to the third fixed-side plate 22. Numeral 83 indicates a biased spring which passes through the first fixed-side plate 24 and the second fixed-side plate 23 so as to facilitate the removal of the third fixed-side plate 22 from the first fixed-side plate 24. Numeral 84 indicates a stopper bolt interposed between the first fixed-side plate 24 and the second fixed-side plate 23.

The manner in which a multi-stacked circular plate fan A is produced by the mold C for molding a multi-stacked circular plate fan according to this first embodiment is explained concretely in conjunction with attached drawings Fig. 8 to Fig. 14.

### (First step)

As shown in Fig. 8(a), the movable-side plate 21, the third fixed-side plate 22, the second fixed-side plate 23 and the first fixed-side plate are mounted on the movable carrier 20 as an assembled body. The circular plate fan forming spaces S2 and the spacer forming spaces S1 are formed by the inner core 25 and the outer core 27 made of a plurality of core units 26.

Subsequently, mold resin which is fed to the resin inflow passage 73 of the injection nozzle 74 under pressure is filled into the circular plate fan molding spaces S2 and the spacer molding portions S1 by way of the central resin inflow recess 71, the runners 72, the longitudinal holes 70 for resin inflow, the resin inflow spaces 52 formed in the gate blocks 51 and the slit-like gates 54 which are formed in the inner face of the gate blocks 51.

In the above resin inflow and filling operation, the filling pressure is applied to the thin blades 45 and the blades 45 may be deformed if no measure is taken and it is difficult to maintain the uniform width throughout the entire circular plate fan molding spaces S2.

However, in this embodiment, resin is filled in the circular plate fan molding spaces S2 from the proximal ends of the blades 45 which are firmly secured to the core units 26, while the distal ends of the blades 45 are firmly held at the outer periphery of the inner core 25. Accordingly, the deformation of the blades 45 can be efficiently prevented so that the width of the circular plate fan molding space S2 can be held uniform.

Therefore, as explained later, in the multi-stacked circular plate fan A as a final molded product, all the annular discs 13 can have the uniform thickness.

Furthermore, resins filled in the circular plate fan molding spaces S2 are integrally connected each other by means of the resin filled in the spacer molding portions S1.

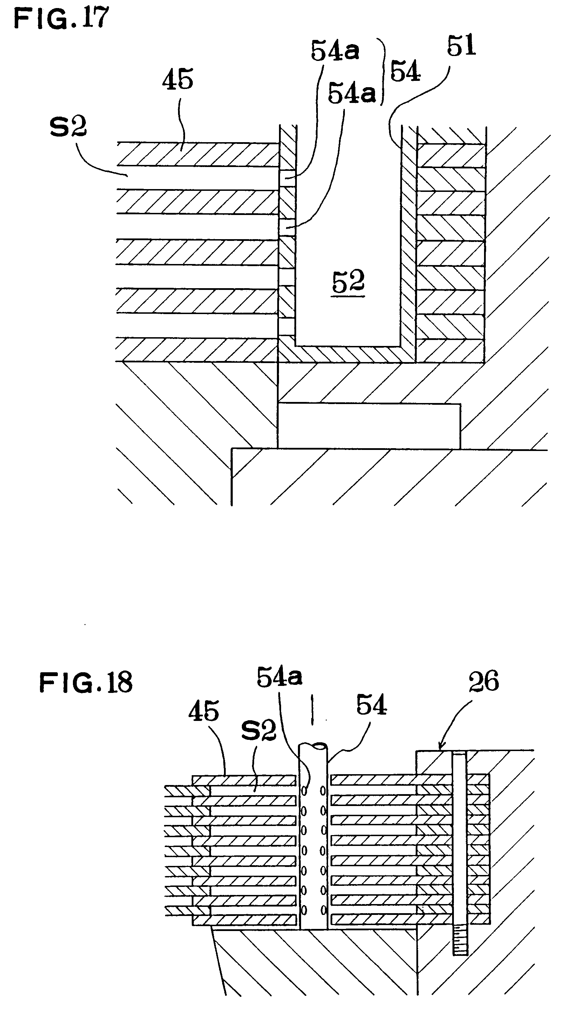

Although, in this embodiment, molding resin is filled in the circular plate fan molding spaces S2 through the gates 54, as shown in Fig. 17 schematically, the gates 54 formed in the gate blocks 51 may be made of a plurality of pin holes 54a formed at a desired interval in a longitudinal direction in lieu of the slit and resin may be filled in each circular plate fan molding space S2 through the pin holes 54a.

Furthermore, since the gates 54 are provided approximately around the entire periphery of the circular plate fan molding space S1 so that the distance from each gate to the ends of the circular plate fan molding space S2 between blades 45, 45 can be shortened and resin can be uniformly filled in the entire portions of the circular plate forming space S2 thus preventing the occurrence of a weld or a molding segregation. Accordingly, a large-sized multi-stacked circular plate fan A can be manufactured. Furthermore, since the resin can be filled into any corners of the circular plate forming space S1 even under a low injection pressure, the rigidity of the mold C can be decreased and the mold C can be produced in an inexpensive manner.

Furthermore, as shown in Fig. 18 schematically, the gates 54 are provided at an approximately intermediate position between the outer periphery and the inner periphery of each blade 45 and resin can be filled in the circular plate fan molding space S2 in all radial directions from this gate 54. Since the distance from the gate 54 to the outer periphery and the inner periphery of the circular plate fan molding space S2 is shortened to approximately half the distance of a case that the gate 54 is formed in either outer periphery or the inner periphery of the circular plate fan molding space S2. Accordingly, the time necessary for filling the resin to corners of the circular plate fan molding space S2 can be shortened so that resin can be uniformly filled in the circular plate fan molding space S2.

Still furthermore, in case the gate 54 is made of a slit or a plurality of pin holes, as will be described later, when the resin is filled in the circular plate fan molding space S2 and the spacer forming space S1 and is hardened, as the runner produced in the gate block 51 is removed, the connection between the runner and the hardened resin formed between the circular plate fan molding spaces S2 can be automatically terminated by a shearing force.

Furthermore, in case the gate 54 is made of a slit, it becomes more advantageous compared to a case in which the gate 54 is made of a plurality of pin holes 54a, since the cleaning of mold waste which is rest within the pin holes 54a can be eliminated.

### (Second step)

After molding resin is hardened or solidified to some extent, as shown in Fig. 8(b), a drive mechanism is driven to move away the movable carrier 20 (in a right direction in the drawing) and corresponding to the above movement of the movable carrier 20, the movable-side plate 21 and the third fixed-side plate 22 are removed from the second fixed-side plate 23 and the first fixed-side plate 24. Due to this removal operation, the runner R can be separated from the fan blade B.

In this condition, as shown in Fig. 12, the multi-stacked circular plate fan A and the runner R are connected through the narrow gate 54 formed in the gate block 51 so that the runner R can be readily severed by shearing and removed from the multi-stacked circular plate fan A. Furthermore, the severance by shearing provides a smooth cutting face with no burrs although the scar is present.

### (Third step)

Subsequently, as shown in Fig. 8(c), the drive device is again driven to remove the movable carrier 20 and the movable-side plate 21 from the third fixed-side plate 22 which is fixedly held in place.

As the movable-side plate 21 is moved away from the third fixed-side plate 22 as shown in Fig. 8(c) with a parallel movement, the slanted pins 42 are removed from the slanted pin inserting holes 41. Since the slanted pins 42 are engaged with the slanted pin inserting holes 41 in an inclined manner, corresponding the parallel movement of the slanted pins 42, the core units 26 receive a force in a radial direction which move the core units 26 in a direction to be away from the inner core 25. This movement causes the complete removal of the blades 45 which are integral with the core units 26 from the multi-stacked circular plate fan A.

### (Fourth step)

Subsequently, as shown in Fig. 8(d), when the first fixed-side plate 24 is separated by a horizontal movement from the second fixed-side plate 23 which is fixedly held, the runner lock pin 75 is retracted into the second fixed-side plate 23 whereby the runner R is separated from the second fixed-side plate 23 and falls down by gravity.

### (Fifth step)

Subsequently, as shown in Fig. 8(e), when the strip rod 62 which works as a fan removing means is extended, the multi-stacked circular plate fan A is removed from the inner core 25 and falls down by gravity. Thereafter, repeating the above steps 1 to 5, the precise multi-stacked circular plate fans A each of which has both the inner and outer peripheries thereof open-ended and a uniform thickness can be continuously manufactured by an integral molding on a mass production basis. Thus, these fans A can be manufactured inexpensively.

Conventional multi-stacked circular plate fans lose the balance at high speed rotation so that a fine adjustment is required on each multi-stacked circular plate fans such as cutting a part of the fans. Whereas, according to this embodiment, a fine adjustment on the blades 45 of the mold for molding a multi-stacked circular plate fan A is sufficient, whereby the adjusting operation becomes easy.

Furthermore, the multi-stacked fans A which are produced in the above manner are integrally molded articles so that these fans A have a sufficient, strength and breakage of fans during operation can be minimized.

Still furthermore, the multi-stacked circular plate fans A which are manufactured by the mold for molding a multi-stacked circular plate fan C according to this embodiment can make the gap between the annular circular plates 13, 13 as narrow as possible so that the multi-stacked circular plate A, while maintaining a compact form thereof, assures a sufficient air contact surface, whereby the blow-off amount of air can be remarkably increased and the lines of air flow can be streamlined thus minimizing the occurrence of the noise or sound during operation.

Accordingly, the multi-stacked circular plate fan A can be used in any fields such as fans for heat transferring apparatus besides the hot air blow-off fan or the deodoring fan.

As has been described heretofore, the mold C for molding the multi-stacked circular plate fan according to this embodiment and the method for producing the multi-stacked circular plate fan A with the mold C have following advantages.
① Since the mold C for molding a multi-stacked circular plate fan is separated into the inner core 25 and the outer core 27 and the outer core 27 comprises a plurality of blades 45 which are stacked with a desired gap therebetween and communicating holes 90 for resin flow formed in the blades 45, the multi-stacked fan A having the inner and outer peripheries thereof open-ended can be readily and integrally molded.
② Since molding resin is injected into the circular plate fan molding space S2 in a direction almost parallel to the blades 45 through the gate 54 longitudinally formed in the gate block 51, the deformation of the blades 45 can be prevented, whereby resin can be uniformly injected into the space having a narrow gap and defined between the blades 45, 45 so that a precise or fine multi-stacked circular plate fan A having thin annular blades of uniform thickness and a narrow gap between the annular blades can be molded.
③ Since the gate block 51 is formed in the fixed-portions of the blades 45 which has a sufficient mechanical strength, and the gate 54 which is made of either a narrow slit or a plurality of pin holes 54a of small diameter is mounted on the gate block 51 and the molding resin can be injected into each circular plate fan molding space S2 in a direction approximately parallel to the blades 45, the deformation of the blades 45 at the time of resin injection can be prevented and resin can be injected uniformly. Furthermore, since the gate 54 is made of the narrow slit or a plurality of pin holes of a small diameter, at the time of removing molds, in a mold separating operation the connection between the multi-stacked circular plate fan A and the runner which is a solidified resin in the gate block 51 can be separated, thus the runner portion can be automatically cut from the multi-circular plate fan A.
④ Usually, as method for uniformly filling resin into a narrow gap, it may be possible to increase the fluidity of resin by heating resin up to a temperature close to a durable temperature while heating the mold up to a temperature more than a usual operating temperature to prevent the lowering of the temperature of resin. However, such method, on the other hand, decreases the strength of resin by an excessive heating thus deteriorating the quality of the multi-stacked circular plate fan A. To the contrary, according to this embodiment, as described above, resin can be filled into the gaps between the blades 45, 45 uniformly without heating itself so that the lowering of the strength of the molded products can be prevented.
⑤ The gaps formed among a multiplicity of blades which are stacked to the outer core 27 define circular plate fan molding spaces S2 and molding resin is filled into all circular plate fan molding spaces S2 through the gate 54 so that molding resin can be simultaneously filled into all circular plate fan molding spaces S2 whereby a multi-stacked circular plate fan A of a uniform quality can be manufactured.
⑥ Since the gates 54 are provided approximately around the entire periphery of the circular plate fan molding spaces S1, the distance from each gate 54 to the ends of the circular plate fan molding space S2 between blades 45, 45 can be shortened and resin can be uniformly filled in the entire portions of the circular plate fan forming spaces S2 thus preventing the occurrence of a weld or a molding segregation. Accordingly, a large-sized multi-stacked circular plate fan A can be manufactured. Furthermore, since the resin can be filled into every corners of the circular plate molding spaces S1 even under a low injection pressure, the rigidity of the mold C can be decreased and the mold C can be produced in an inexpensive manner.
⑦ In case the gates 54 are provided at an approximately intermediate position between the outer periphery and the inner periphery of each blade 45, the distance from each gate 54 to the ends of the circular plate fan molding space S2 between blades 45, 45 can be shortened and resin can be uniformly filled in the entire portions of the circular plate fan forming spaces S2 thus preventing the occurrence of a weld or a molding segregation. Accordingly, a large-sized multi-stacked circular plate fan A can be manufactured. Furthermore, since the resin can be filled into every corners of the circular plate molding spaces S1 even under a low injection pressure, the rigidity of the mold C can be decreased and the mold C can be produced in an inexpensive manner.
⑧ Since the outer core 27 is made of a plurality of separable core units 26 and each core unit 26 is slidable in a radial direction toward or away from the inner core 25, the assembling and dismounting of the outer core 27 relative to the inner core 25 can be readily and reliably carried out thus enabling the easy and prompt molding operation.
⑨ The blade retainer plates 33 which are provided as a retaining portion for retaining the blades 45 mounted on the outer core 27 form a stacked construction made of two kinds of rings 33a, 33b so that the retaining portion can be easily manufactured. Furthermore, the degree of precision can be enhanced thus improving the precision of the multi-stacked circular plate fan A. Furthermore, the maintenance of the mold such as a replacement of a part thereof can be readily carried out.
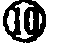 The blades 45 have the distal ends thereof all magnetized in the same polarity so that gaps between the blades can be held equal thus the blade retaining portion can be obviated.

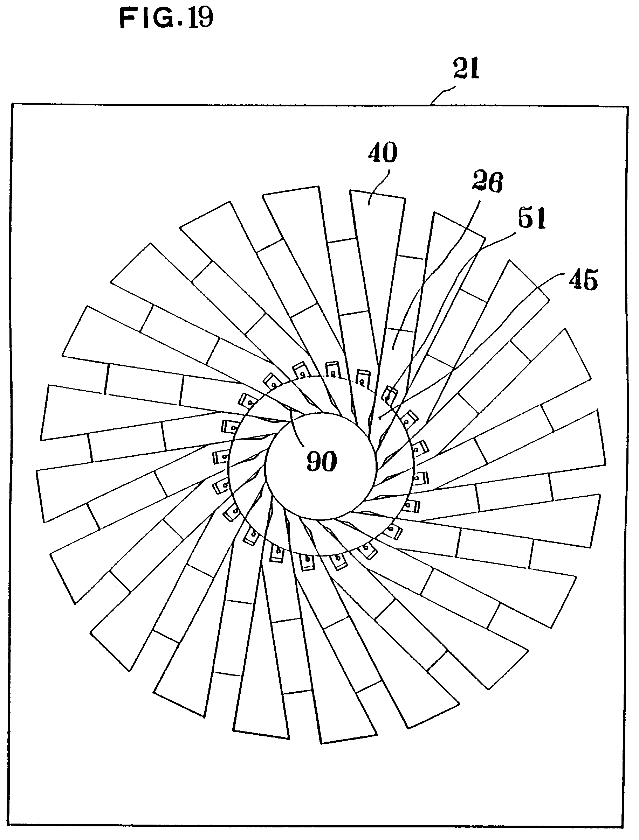

The improvement of the first embodiment is shown in Fig. 19 to Fig. 21.

As shown in Fig. 19 and Fig. 20, the communicating holes 90 for resin flow which form a spacer molding portion S1 by stacking blades 45 have an approximately linear shape and each communicating hole 90 is formed by uniting curved recesses 91, 92 formed at both side peripheries of each blade 45.

These curved recesses 91, 92 have their curved faces 91a, 92a made parallel to the movement of the blades 45 while the curved faces 91b, 92b are tapered in a converged manner.

Accordingly, in an operation to retract the outer core 27 together with the blades 45 in a radial direction after resin material is filled into the spacer forming spaces S1 which are made of communicating holes 90 and then resin is subsequently solidified, the engagement of the curved faces 91a, 92a of the curved recesses 91, 92 with the molded spacer can be prevented so that the blades 45 can be retracted radially at a desired retracting angle.

In this manner, the mold C for molding a multi-stacked circular plate fan according to this improvement, as shown in Fig. 19, can readily manufacture the multi-stacked circular plate fans A of favorable fan properties such as tranquil rotating sound, wherein the spacers are made of vanes having outer trailing edges and the inner and outer edges of the spacers are disposed away from the inner and outer peripheries thereof respectively.

Furthermore, the mold C can unnecessitate the inner core which is difficult to produce so that the mold C for molding a multi-stacked circular plate fan can be manufactured in an expensive manner.

### (Second Embodiment)

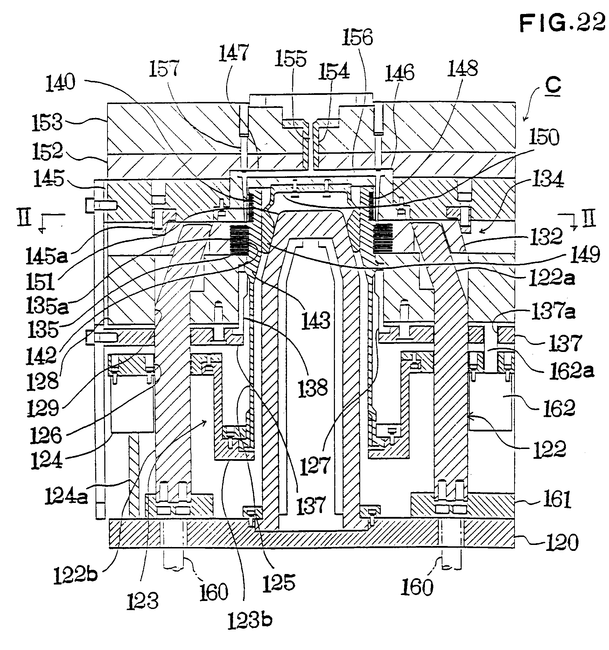

The construction of the mold C for molding a multi-stacked circular plate fan according to the second embodiment is explained concretely in conjunction with Fig. 22 to Fig. 25.

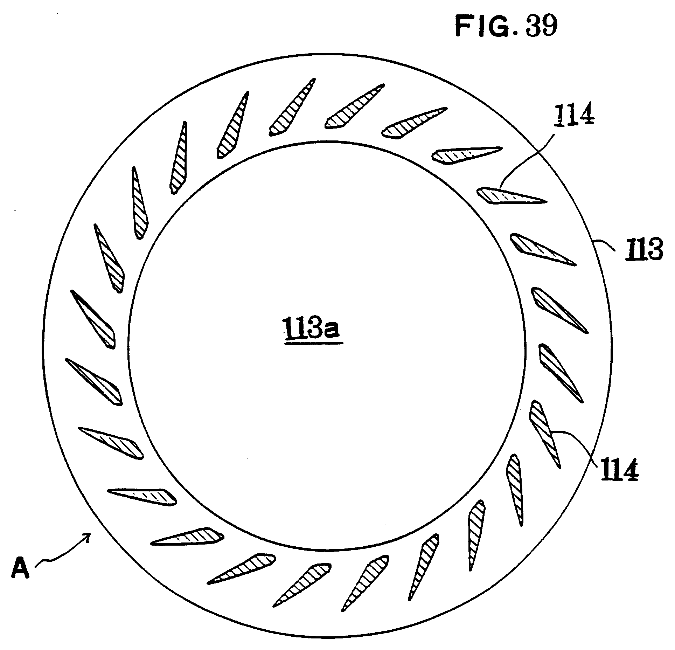

As shown in Fig. 39, the multi-stacked circular plate fan A produced in the second embodiment is provided with spacers 113 made of vanes having trailing outer edges, which, as explained in the improvement of the first embodiment, have the more favorable fan properties compared to the radial vanes.

The entire construction of the mold C for molding the multi-stacked circular plate fan is explained in view of Fig. 22 and Fig. 23.

In Fig. 22, numeral 120 indicates an elevatable carrier which is elevated by an elevating means not shown in the drawings and an elongated center pin 121 having a hollow circular cross section is vertically mounted on a central portion of an upper surface of the elevatable carrier 120.

On the upper surface of the elevatable carrier 120, an annular guide mounting plates 161 are mounted and the guide mounting plates 161 are elevatable relative to the elevatable carrier 120 by means of guide driver cylinders 160.

A plurality of elongated core unit protrusion guides 122 are mounted on the outer periphery of the guide mounting plate 161 in a circumferentially spaced apart manner. At upper portions of the protrusion guides 122, the inclined core unit moving portions 122a are formed and these portions 122a are inclined toward the axis of the center pins 121.

Above the elevatable carrier 120, a circular-plate-shaped core mounting frame 123 which is provided with a recessed central portion is concentrically disposed.

The peripheral portions 123a of the core mounting frames 123 are supported on the elevatable carrier 120 by means of a plurality of operating cylinders 124. Upon actuation of the operating cylinders 124, the core mounting frame 123 is moved in an axial direction relative to the elevatable carrier 120. Numeral 124a indicates a cylinder rod of the operating cylinder 124.

On the inner periphery of the recessed portion 123b of the core mounting frame 123, an inner core 125 made of a cylindrical collapsible core is fixedly secured.

Furthermore, a plurality of rectangular-shaped guide through holes 126 are formed in the peripheries 123a of the core mounting frame 123 in a circumferentially spaced-apart manner. The straight portions 122b of the protrusion guides 122 pass through these guide through holes 126.

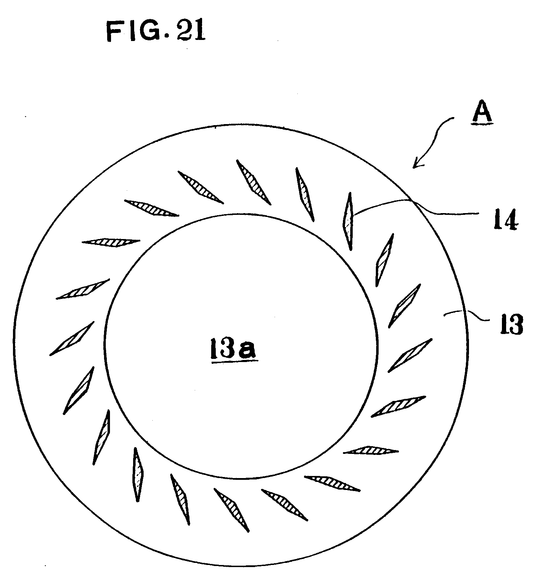

The inner core 125 made of an collapsible core, as shown in Fig. 22 to Fig. 25, especially in Fig. 25, is constructed such that a multiplicity of blades 140a are mounted on an outer molding face provided on the upper outer periphery of the inner core 125 so as to define a multiplicity of second horizontal annular grooves 140 in an axially spaced apart manner. As shown in Fig. 21 and Fig. 22, a plurality of second communicating holes 141 for resin inflow are formed in the inner openings of the second horizontal annular grooves 140 in a circumferentially spaced apart manner.

Furthermore, the inner core 125 is provided with a multiplicity of annular horizontal brims 142 on the outer molding surface thereof at a position axially remote from the second horizontal annular grooves 140, while an annular protrusion 143 which comes into contact with an upper end of an outer sleeve 138 which will be described later is disposed below the annular horizontal brims 142.

As shown in Fig. 25, the inner core 125 has the entire shape thereof made approximately similar to that of the inner core disclosed in the Japanese Patent Application SHO-63-301784 filed by the applicant of this invention, wherein the inner core 125 comprises a cylindrical body 125b provided with a multiplicity of longitudinal slits 125a having an arcuate cross section, a plurality of elongated members 125c having an arcuate cross section which are fit into the respective longitudinal slits 125a and the elongated members 125c are fixedly mounted on the cylindrical body 125b by means of a retainer sleeve 125d.

Furthermore, as shown in Fig. 20, above the core mounting frame 123, a thick movable mold 128 having a core through opening 127 is concentrically disposed and the inner core 125 passes through the core through opening 127 in an upward direction.

As shown in Fig. 22, a plurality of rectangular shaped guide through holes 129 are formed in the outer periphery of the movable mold 128 in a circumferentially spaced apart manner and the inclined portion 122a and the straight portion 122b of the protrusion guides 122 pass through.

The guide through holes 129 have an upper radial length made greater than a lower radial length for allowing the inclined portion 122a of the protrusion guides 122 pass through the guide through holes 129.

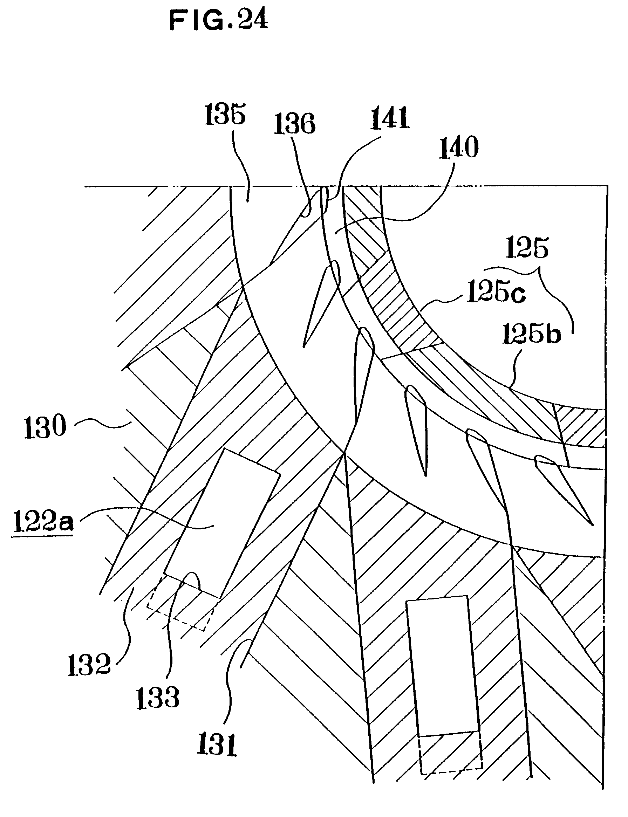

The movable mold 128 is, as shown in Fig. 23 and Fig. 24, provided with a plurality of triangular shaped core guide blocks 130 in plan on the upper surface thereof. Between the core guide blocks 130, 130, a core guide groove 131 which extends in a direction toward the center of the movable mold 128 with an inclination α is formed.

A core unit 132 is radially and slidably disposed in the core guide groove 131, while the core unit 132 is provided with a guide insert hole 133 through which the inclined portion 122a of the protrusion guides 122 pass. The above-mentioned plurality of core guide blocks 130 and a plurality of the core units are assembled to form an outer core 134 on the movable mold 128.

Due to such a construction, corresponding to the elevating movement of the protrusion guides 122, the core units 132 move radially.

As shown in Fig. 22, each core unit 132 forms an inner molding surface on the inner surface thereof and a multiplicity of blades 135a are mounted on the inner molding surface in a stacked manner thus defining a multiplicity of narrow first horizontal annular grooves 135 between blades 135a, 135a. Furthermore, as shown in Fig. 23 and Fig. 24, on the inner molding surface, a first communicating hole 136 for resin inflow which extends in a radial direction is formed.

The first horizontal annular grooves 135, as will be explained later, corresponding to the axial relative movement of the inner core 125, are aligned respectively with annular horizontal brims 142 and the second horizontal annular grooves 140 provided on the outer surface of the inner core 125.

When the first horizontal annular grooves 135 and the annular horizontal brims 142 are aligned with each other as shown in Fig. 22, the annular horizontal brims 142 are inserted into the first horizontal annular grooves 135.

On the other hand, when the first horizontal annular grooves 135 are aligned with the second horizontal annular grooves 140, as shown in Fig. 23 and Fig. 24, the first communicating holes 134 for resin inflow formed in the outer core 134 are aligned with the second communicating holes 141 for resin flow formed in the outer surface of the inner core 125.

Furthermore, as shown in Fig. 22, the movable mold 128 is integrally provided with an outer sleeve mounting plate 137 on a bottom face thereof and the proximal ends of the outer sleeve 138 for retaining the other peripheral surface of the collapsible core 125 are connected to the inner peripheral portion of the outer mounting plate 137.

Still furthermore, as shown in Fig. 22, front extremities of cylinder rods 162a of operating cylinders 162 are connected to the bottom face of the other periphery of the movable mold 128, while the proximal ends of the operating cylinders 162 are mounted on the outer periphery 123a of the core mounting frame 123.

Due to such a construction, upon actuation of the operating cylinders 162, the core mounting frame 123 and the inner core 125 mounted on the core mounting frame 123 are moved in an axial direction relative to the movable mold 128.

The cylinder rods 162a of the operating cylinders 162 pass through rod through holes 137a formed in the outer periphery of the outer sleeve mounting plate 137.

As shown in Fig. 22 and Fig. 23, above the movable mold 128, a fixed mold 145 is concentrically disposed and a resin inflow guide plate 146 is snugly fitted into the inner peripheral side of the fixed mold 145. The resin inflow guide plate 146 forms a flattened resin inflow space 147 on the upper surface thereof and a plurality of resin inflow passages 148 around the resin inflow space 147 in a circumferentially spaced-apart manner, wherein the resin inflow passages 148 make the above-mentioned resin inflow space 147 communicate with the first communicating holes 136 for resin inflow and the second communicating holes 141 for resin inflow.

On the bottom surface of the resin inflow guide plate 146, a core opening assisting collet 150 which suspends a plurality of radially expandible and shrinkable operable members at the outer periphery thereof is fixedly mounted. The core opening assisting collet 150 cooperates with the upper tapered face of the above-mentioned center pin 121 to make the outer molding face of the inner core 125 urgedly come into contact with the inner molding face of the outer core 134 or release such a contact.

As shown in Fig. 22, on the periphery of the bottom surface of the fixed mold 145, a plurality of stoppers 145a are provided in a circumferentially spaced apart manner so as to restrict the excessive radially outward movement of the core units 132 beyond the predetermined distance.

As shown in Fig. 22, on the fixed mold 145, a stripper 152 and an injection mold 153 are disposed in layers and resin charging passages 154, 155 are formed in the central portions of these stripper 152 and the injection mold 153 respectively, wherein these resin charging passages 154, 155 communicate with the resin inflow space 147 provided at the upper portion of the resin inflow guide sleeve 146.

On the peripheries of the stripper 152 and the injection mold 153, a plurality of runner removal punch guide holes 157 are provided for removing a runner 156 formed in the resin inflow space 147 and the resin charging passages 154, 155 as a result of solidification of molding resin therein.

In Fig. 22 and Fig. 26 to Fig. 35 which are later referred to, numeral 158 indicates a first connecting link which connects the movable mold 128 with the fixed mold 145 while numeral 159 indicates a second connecting link which connects the fixed mold 145 with the stripper 152 and the injection mold 153.

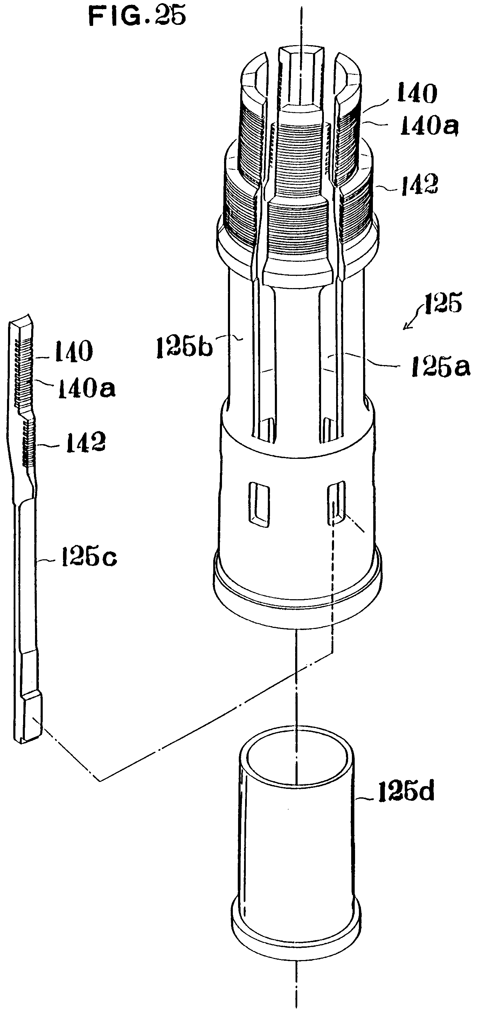

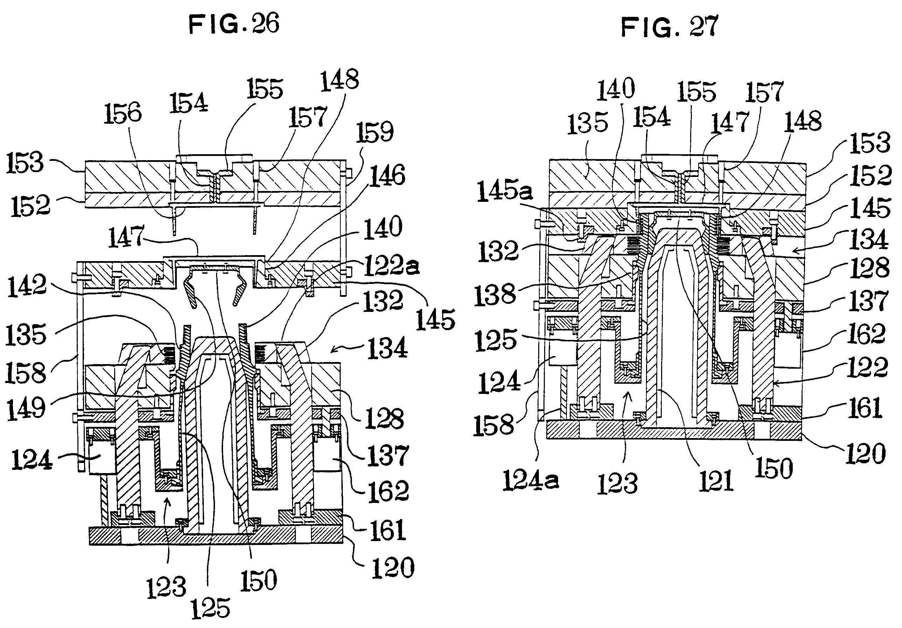

The method for molding a multi-stacked circular plate fan A with the above-mentioned molding device C for molding a multi-stacked circular plate is concretely explained in view of Fig. 26 to Fig. 38. In these drawings, Fig. 26 to Fig. 38 are enlarged explanatory views of Fig. 26, Fig. 27 and Fig. 30 respectively.

### (First step)

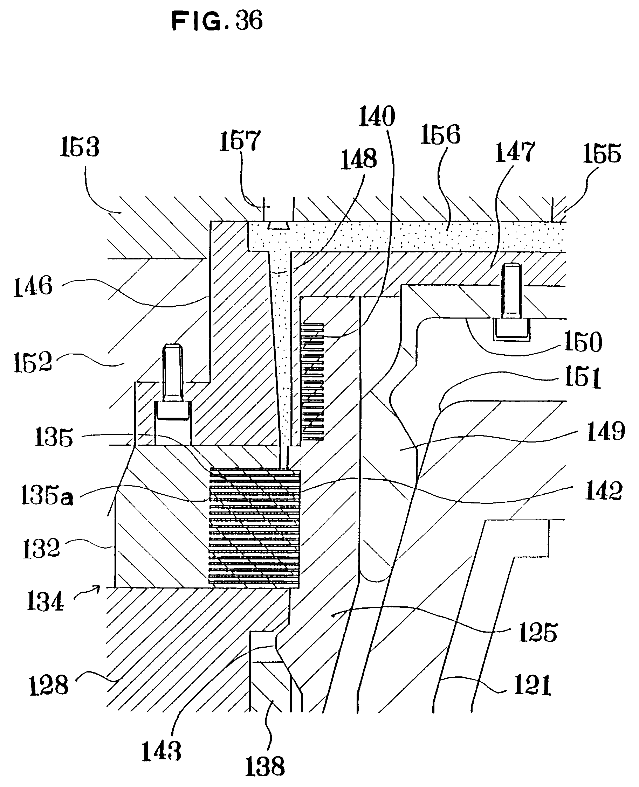

As shown in Fig. 25 and Fig. 36, in the molding device C, a plurality of annular horizontal brims 142 which are formed on the outer molding face of the inner core 125 made of the extendible and shrinkable collapsible core in an axially spaced apart manner are snugly fitted into the inner peripheral openings of a plurality of first horizontal annular grooves 135 formed in the inner molding surface of the outer core 134 in an axially spaced apart manner to define spaces for molding the outer peripheral portions of the annular plates 113 of the above-mentioned multi-stacked circular plate fan A.

Subsequently, molding resin is injected into these outer peripheral portion molding spaces by way of the resin charging passage 155 formed in the injection mold 153, the resin charging passage 154 formed in the stripper 152, the resin inflow space 147, the resin inflow passages 148 defined in the resin inflow guide plate 146 and the first communicating holes 136 for resin inflow (see Fig. 23) formed in the inner molding face of the outer core 134.

In this resin injecting operation, thin blades 135a must withstand the injection pressure. If there were no means, the blades 135a are deflected or deformed so that it is difficult to make the width of the all the spaces for molding the outer peripheral portion of the multi-stacked plate fan A uniform.

In this embodiment, since the annular horizontal brims 142 are inserted into the first horizontal annular grooves 135, the deformation of the blades 135a can be reliably prevented thus assuring a uniform thickeness of the outer peripheral portion forming space.

Accordingly, as will be explained later, a multi-stacked circular plate fan A as a final product can make all annular circular plates 113 being of a uniform thickness.

Furthermore, in this embodiment, resin can be injected into the circular plate fan molding space by way of a multiplicity of first communicating holes 136 for resin inflow so that the injecting operation can be carried out at a low injection pressure thus enabling the thin mold which can be produced in an inexpensive manner.

### (Second step)

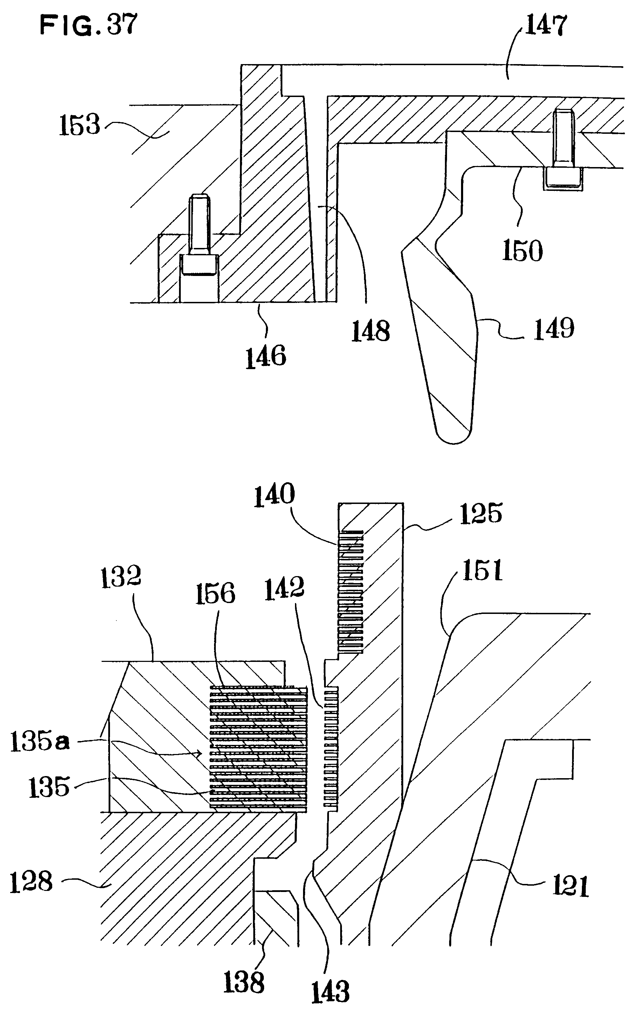

After molding resin is solidified to some extent, as shown in Fig. 27 and Fig. 37, the elevatable carrier 120 is lowered by actuating the elevating device and corresponding to this lowering operation, the fixed mold 145 is removed from the movable mold 128 and the injection mold 153 and the stripper 152 are integrally removed from the fixed mold 145. In the above operation, since the core opening assisting collet 150 which is interposed between the upper tapered face 151 of the center pin 121 and the inner core 125 is removed, the inner core 125 radially shrinks and this shrinking provides a complete removal of the annular horizontal brims 142 from the first horizontal annular grooves 135.

### (Third step)

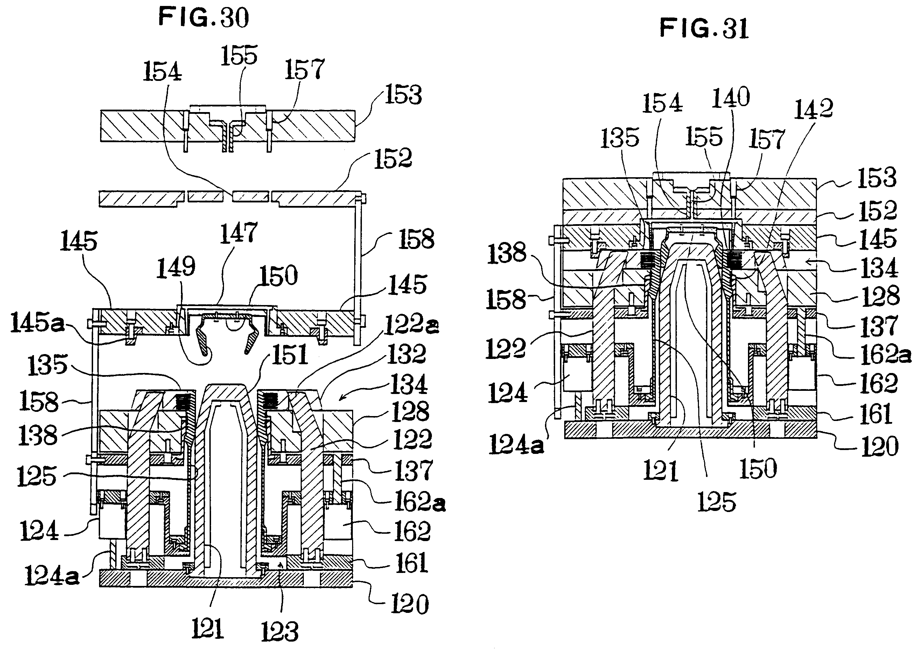

In this condition, as shown in Fig. 29, since the runner 156 which is a solidified residue of molding resin still adheres to the bottom surface of the stripper 152, the runner 156 must be removed to advance to the next step.

For this purpose, as shown in Fig. 29, a punch is extended downwardly passing through the runner removal punch guide holes 157 formed in the injection mold 153 and the stripper 152 so that the runner 156 can be removed.

### (Fourth step)

Subsequently, as shown in Fig. 29, the operating cylinders 124 are actuated to move in a retracting direction while the operating cylinders 162 are actuated to move in an extending direction. Due to such operations, the core mounting frame 123 and the inner core 125 are integrally lowered relative to the elevatable carrier 120 and the center pin 121 which are held stationary. The first horizontal annular grooves 135 of the outer core 134 are lowered and expanded on a horizontal plane so that the first horizontal annular grooves 135 are aligned and communicated with the second horizontal annular grooves 140 formed between blades 140a mounted on the outer molding surface of the inner core 125 in an axially spaced apart manner, whereby a space for molding the inner periphery of the annular circular plates 113 of the multi-stacked circular plate fan A is formed.

In this condition, the second communicating holes 141 for resin inflow formed in the outer molding surface of the inner core 125 are aligned with the first communicating holes 136 for resin inflow formed in the inner molding surface of the outer core 134.

### (Fifth step)

As shown in Fig. 30 and Fig. 38, the elevating device is actuated to elevate the elevatable carrier 120 and then the movable mold 128, the fixed mold 145, the stripper 152 and the injection mold 153 are integrally assembled again to give rise to a condition which enables a molding operation as in the case of the molding operation shown in Fig. 25. Thereafter, additional molding resin is injected into the inner peripheral molding space by way of the resin charging passage 155 formed in the injection mold 153, the resin charging passage 154 formed in the stripper 152, the resin inflow space 147 and the resin inflow passages 148 formed in the resin inflow guide plate 146 and the second communicating holes 141 for resin inflow (see Fig. 23) formed in the outermolding surface of the inner core 125.

Molding resin which is injected in this manner forms an inner peripheral portion of each annular plate 113 of the multi-stacked circular plate fan A and is integrally merged with the outer peripheral portion which was already molded to form the annular plates 113. In the same manner, molding resin filled in the second communicating holes 141 for resin inflow are integrally merged with spacer portion which was molded in the first communicating holes 136 for resin inflow to mold spacers 114 having a shape of vane.

### (Sixth step)

As shown in Fig. 29, the elevatable carrier 120 is lowered again with the actuation of the elevating device. Corresponding to this lowering operation, the fixed mold 145 is removed from the movable mold 128 and the injection mold 153 and the stripper 152 are integrally removed from the fixed mold 145.

In the above operation, since the core opening assisting collet 150 which is interposed between the upper tapered surface of the center pin 121 and the inner core 125 is removed, the inner core 125 shrinks in a radial direction and this shrinking operation provide a complete removal of the annular horizontal brims 142 from the first horizontal annular grooves 135.

### (Seventh step)

In this condition, as shown in Fig. 31, since the runner 156 which is a solidified residue of molding resin still adheres to the bottom surface of the stripper 152, the runner 156 must be removed to advance to the next step.

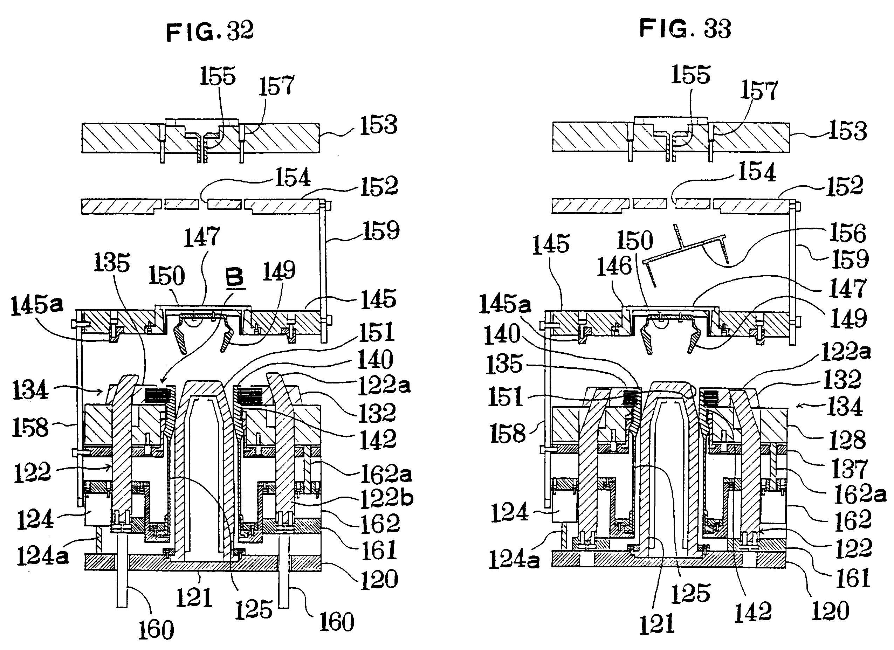

For this purpose, as shown in Fig. 32, a punch is extended downwardly passing through the runner removal punch guide holes 157 formed in the injection mold 153 and the stripper 152 so that the runner 156 can be removed.

### (Eighth step)

Subsequently, as shown in Fig. 33, the guide operating cylinders 160 is advanced to elevate the core unit protrusion guides 122 along with guide mounting plate 161 relative to the elevatable carrier 120 which is held stationary. Due to this elevating movement, the inclined portions 122a formed at the extremity of the core unit protrusion guides 122 engage with the guide inserting grooves 133 formed in the core units 132 so that the core units 132 retract in a radial direction. Simultaneously, corresponding to the elevating movement of the guide mounting plate 161, the inner core 125 is elevated integrally. Since the center pin 121 is fixed to the elevatable carrier 120 which is stationary, the inner core 125 shrinks radially.

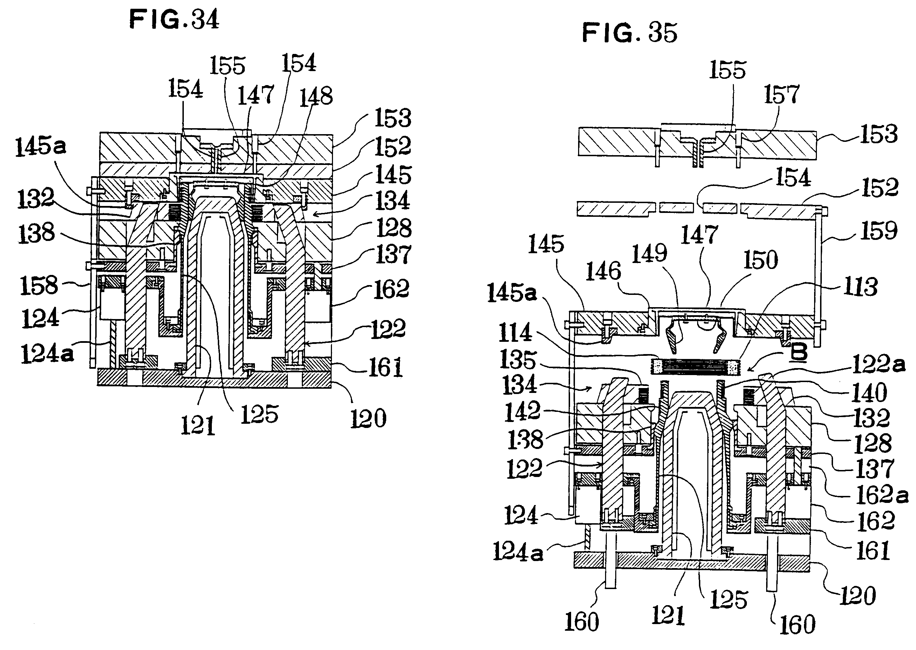

Accordingly, as shown in Fig. 34, the fan blade B as a multi-stacked thin plate body can be completely removed outside from the inner core 125 and the outer core 130.

### (Ninth step)

Thereafter, the elevating device is actuated to elevate the elevatable carrier 120 again. The movable mold 128, the fixed mold 145, the stripper 152 and the injection mold 153 are all integrally assembled while the operating cylinders 124 are operated in a retracting direction and the operating cylinders 162 is operated in an advancing direction to establish a moldable condition in Fig. 27. This moldable condition is substantially the same as the first step.

Namely, as shown in Fig. 26 and Fig. 36, using the same mold C for molding a multi-stacked circular plate fan, a plurality of annular horizontal brims 142 which are formed on the outer molding face of the inner core 125 made of the extendible and shrinkable collapsible core in an axially spaced apart manner are snugly fitted into the inner peripheral openings of a plurality of first horizontal annular grooves 135 formed in the inner molding surface of the outer core 134 in an axially spaced apart manner to define spaces for molding the outer peripheral portions of the annular plates 113 of the above-mentioned multi-stacked circular plate fan A.

Thereafter, repeating the above-mentioned first step to ninth step, the multi-stacked circular plates A can be continuously and integrally molded thus enabling the mass production of the precise multi-stacked circular plate fan A in an inexpensive manner.

Furthermore, the other advantages or features obtained by the molding apparatus C according to this embodiment are explained hereinafter.
① Since the annular plates 13 of the multi-stacked circular plates are molded in two molding stages for molding the outer peripheral portion and the inner peripheral portion respectively, the blades 135a of the outer core 134 can be made as thin as possible so that the thickness of the annular plates 13 and the gap δ between the annular plates 113, 113 also can be made as thin as possible, whereby while assuring a compact shape, the blow-off amount of air can be increased while lowering the operating sound of the fan.
② Since the gates (first and second communicating holes 136, 141 for resin inflow) are provided for spacers 14 respectively, the molding under low pressure becomes possible and the mold can be produced in an inexpensive manner.
③ A single molding gate (first and second communicating holes 136, 141 for resin inflow) can mold the outer peripheral portion and the inner peripheral portion of the circular plates 13, thus facilitating the molding operation.
④ The inner core 125 can be reliably retracted by means of a forcible retracting device made of the annular protruding portion 143 mounted on the outer surface of the inner core 125 and the outer sleeve 138 so that the rupture of the inner core 125 can be reliably prevented.
⑤ With the provision of the core opening assisting collet 150, the seizure of the inner face of the inner core 125 to the outer peripheral face of the center pin 121 can be prevented.
⑥ By retracting the core units 132 alternatively rather than simultaneously, the retracting force can be dispersed so that rupture of the multi-stacked circular plate fan A as a final product can be prevented.
⑦ The inner peripheral portion of the annular plate 13 can be integrally molded by the inner core 125 while holding a molded product (the outer peripheral portion of the annular plate 13) in the core unit 132 thus facilitating the double molding.
⑧ In case the inner diameter of the multi-stacked circular plate fan A is made greater than the outer diameter of the inner core 125, the occurrence of scars on the surface of the molded products at the time of slide movement of the inner core 125 can be prevented.

### (Third embodiment)

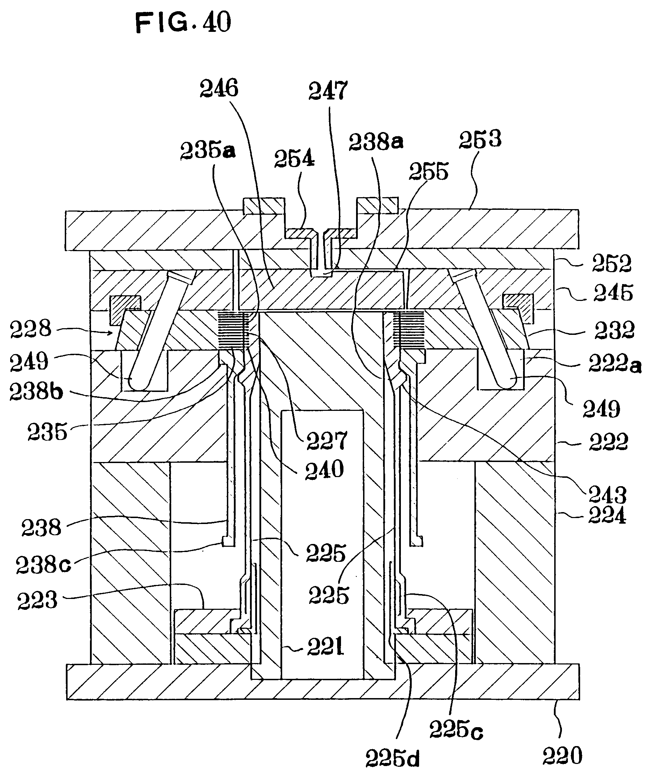

First, the construction of the mold C for molding a multi-stacked circular plate fan is explained in conjunction with Fig. 40 to Fig. 42. Since the multi-stacked circular plate fan A has the same construction as the fan produced by the mold C for molding a multi-stacked circular plate fan according to the second embodiment so that the fan A is explained using the same numerals.

In Fig. 40, numeral 220 indicates a carrier which is movable in a frontward or rearward direction by a drive mechanism (not shown in drawings). On the upper central portion of the carrier 220, a center pin 221 having a hollow circular cross section which is reciprocably movable so as to expand or shrink an inner core 225 made of the collapsible core is vertically mounted.

The upper end surface of the center pin 221 functions as a mold for defining an inner surface of a mounting base 113a of the multi-stacked circular plate fan A.

On the upper surface of the carrier 220, an annular guide mounting frame 223 is concentrically mounted and the proximal end of the cylindrical inner core 225 which works as a mold for forming an inner half portion of the multi-stacked circular plate fan A is fixedly connected to inner periphery of the core mounting frame 223. The inner core 225 is provided with, as shown in Fig. 39 to Fig. 40, is provided with a multiplicity of second horizontal grooves 240 defined by a multiplicity of blades 240a on the outer peripheral molding surface. Below the second horizontal annular grooves 240, an annular protruding portion 243 which comes into contact with the upper end of an outer sleeve 238 is provided. The blade 240 is provided with a first communicating hole 241 for resin flow which forms a spacer molding portion S1 together with second communication holes 236 for resin flow which will be explained later.

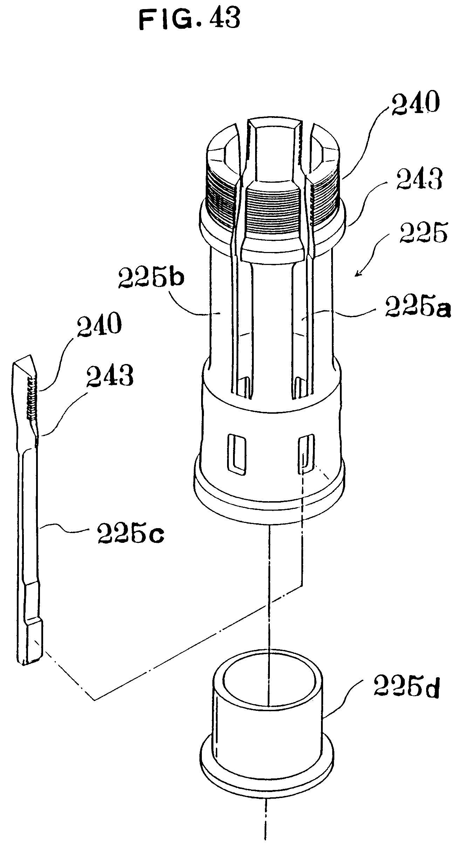

Furthermore, as shown in Fig. 43, the inner core 225 comprises a cylindrical body 225b provided with a multiplicity of longitudinal slits 225a having an arcuate cross section in a circumferentially spaced-apart manner, a plurality of elongated members 225c having an arcuate cross section which are fitted into the respective longitudinal slits 225a and the elongated members 225c are fixedly mounted on the cylindrical body 225b by means of a retainer sleeve 225d.

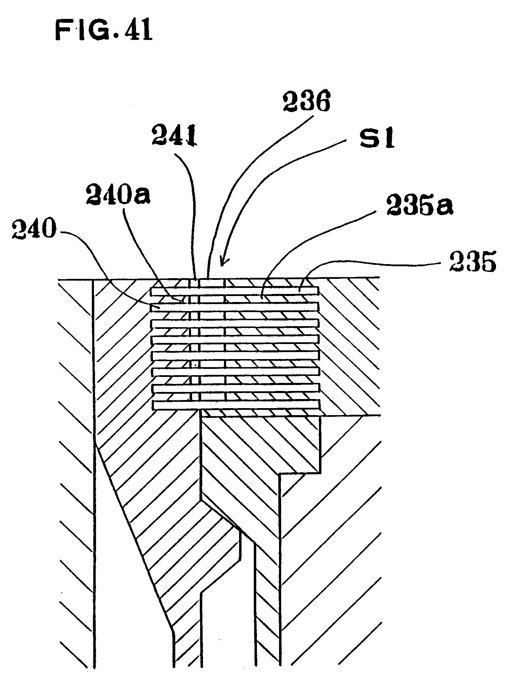

Furthermore, as shown in Fig. 41, above the core mounting frame 223, a thick movable mold 228 having a core through opening 227 is concentrically disposed and the inner core 225 passes through the core through opening 227 in an upward direction.

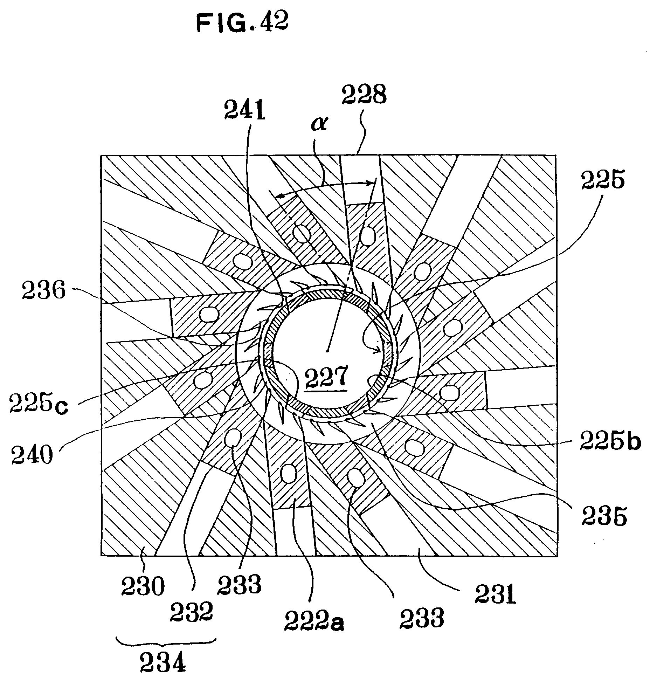

The movable mold 228 which forms an outer halve of the multi-stacked circular plate fan A is, as shown in Fig. 42, provided with a plurality of triangular shaped core guide blocks 230 in plan on the upper surface thereof. Between the core guide blocks 230, 230, a core guide groove 231 which extends in a direction toward the center of the movable mold 128 with a desired enlarged inclination α is formed.

A core unit 232 is radially and slidably disposed in the core guide groove 231, while the core unit 232 is provided with a guide insert hole 233 through which inclined pins 249 which will pass as will be explained later.

The above-mentioned plurality of core guide blocks 230 and a plurality of the core units 232 are assembled to form an outer core 234 on the movable mold 228.

As shown in Fig. 41 and Fig. 42, above the movable mold 228, a fixed mold 245 is concentrically disposed.

Inclined pins 249 which have the lower ends thereof inclined outwardly are fitted into the fixed mold 245. Due to the slide relationship between the slide pins 249 and pin inserting holes 233, corresponding to the elevation movement of the movable mold 228, the core units 232 radially move toward or away from the center of the movable mold 228.

A contactor mounting base 224 made of a large-sized cylindrical sleeve is mounted on the upper surface of the carrier 220 while on the upper surface of the contactor mounting base 224, an annular contactor 222 which is provided with rectangular grooves 222a on the upper surface is mounted.

Inside the inner periphery of the contactor 222, an outer sleeve 238 of a cylindrical shape is slidably disposed and such a sleeve 238 is provided with a tapered inner face 238a squeezed in an upper direction and is provided with brim portions 238b, 238c around the outer periphery at the upper and lower ends thereof.

The above-mentioned contactor mounting base 224 and the contactor 222 move back and forth integrally with the carrier 220 and the outer sleeve 238 is moved back and forth by the contact of brims 238b, 238c formed at the upper and lower ends thereof with the inner surface of the contactor 222. In the retracting movement, the tapered inner face 238a comes into contact with the above-mentioned annular protruding portion 243 so as to reliably shrink the inner core 225.

As shown in Fig. 41 and Fig. 42, each core unit 232 forms an inner molding surface on the inner surface thereof and a multiplicity of first narrow horizontal grooves 235 are stacked on the inner molding surface in a vertical direction by way of a multiplicity of thin blades 235a. Furthermore, as shown in Fig. 41 and Fig. 42, a second communicating holes 236 for resin inflow which extend in a radial direction are formed in the inner molding surface.

Corresponding to these holes 236, on the outer molding surface of the inner core 225, first communicating holes 241 for resin inflow are formed and these first and second communicating holes 241, 236 for resin inflow are merged to form a spacer molding portions S1.

Still furthermore, on the fixed mold 245, as shown in Fig. 40, a stripper 252 and an injection mold 253 are disposed in layers and a nozzle 254 which communicates with a resin inflow space 247 formed in the upper surface of a resin inflow guide plate 246 is snugly mounted.

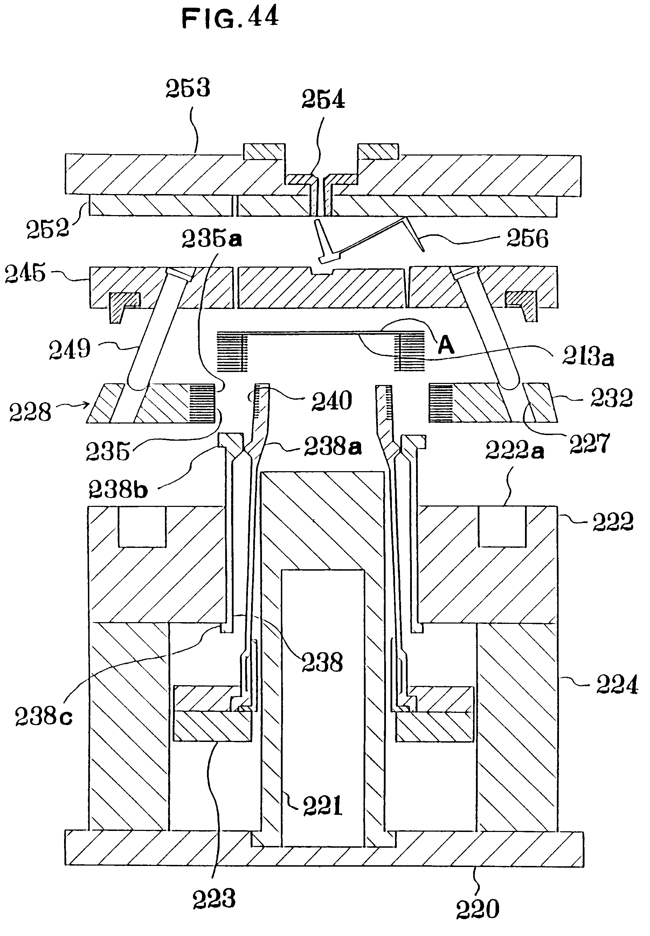

The method for molding a multi-stacked circular plate fan A with the above-mentioned molding device C for molding a multi-stacked circular plate is concretely explained in view of Fig. 40 and Fig. 44.

### (First step)

As shown in Fig. 40, the carrier 220 and the core mounting frame 223 are advanced to assemble the movable mold 228, the fixed mold 245, the stripper 252 and the injection mold 253 integrally. In this condition, the core units 232 of the outer core 234 are shrinked in a direction toward the center due to the slide engagement between the inclined pin 249 and the pin inserting holes 233. The inner core 225 is expanded in a radially outward direction by the center pin 221 inserted into the inner core 225 and the inner core 232 is shrinked radially toward the center by the relative slide movement between the inclined pin 249 and the pin inserting hole 233. Therefore, the horizontal grooves 235, 240 formed in the outer core 234 and the inner core 225 respectively are aligned and merged together while the first and the second communicating holes 236, 241 for resin inflow formed in the outer core 234 and the inner core 225 are aligned and merged together whereby the circular plate fan molding space S2 and spacer molding spaces S1 for molding the annular plates 213, spacers 214 and mounting plate 223a can be defined.

### (Second step)

Subsequently, molding resin is injected into these molding spaces by way of the resin charging passage 255 formed in the injection mold 253, the resin charging passage 254 formed in the stripper 252, the resin inflow space 247, the resin inflow passages 248 defined in the resin inflow guide plate 246 and the first and second communicating holes 236, 241 for resin inflow and resin is held in the molding spaces until it is solidified.

### (Third step)

After molding resin is solidified, the carrier 220 and the core mounting frame 223 are retracted to disassemble the movable mold 228, the fixed mold 245, the stripper 252 and the injection mold. In the above operation, the outer core 234 and the core units 232 are radially outwardly expanded due to the slide engagement between the inclined pins 249 and the pin inserting holes 233, while the inner core 225 is shrinked in a radially inward direction due to the pulling out of the center pin 221 and the contact and slide movement between the tapered inner face 238a of the outer sleeve 238 and the annular protruding portion 243, whereby a molded fan blade B can be removed and taken away outside. Furthermore, a runner which is produced between the stripper 252 and the resin inflow guide plate 246 can be removed (Fig. 43).

Thereafter, repeating the above-mentioned first step to third step, the multi-stacked circular disc plates A can be continuously and integrally molded thus enabling the mass production of the precise multi-stacked circular plate fan A in an inexpensive manner.

Furthermore, the other advantages or features obtained by the molding apparatus C according to this embodiment are explained hereinafter.
① In the mold C for molding a multi-stacked circular plate fan A according to this embodiment, different from the second embodiment, the multi-stacked circular plate A can be molded by a single injection operation so that the strength of a molded product can be enhanced and the construction of the mold C for molding a multi-stacked circular plate fan and the steps of production method can be simplified resulting in inexpensive production of the multi-stacked circular plate fans.
② The inner core 225 can be reliably retracted by means of the annular protruding portion 243 mounted on the outer surface of the inner core 225 and the tapered inner surface 238a of the outer sleeve 138 so that the rupture of the inner core 225 can be reliably prevented.
③ The circular plate fan molding spaces S2 are formed by merging the second horizontal grooves 240 provided between the blades 240a, 240a mounted on the outer core 234 and the first horizontal grooves 235 provided between the blades 235a, 235a provided on the inner core 225 and the gates are provided along a merging line between the blades 240a, 240b. Therefore, the distance between the gates and the inner and outer peripheries of the circular plate molding spaces S2 can be shortened and resin can be uniformly filled into the entire space of each circular molding space S2 thus preventing the occurrence of so called 'welding' and segregation of molding while enabling the production of a large-sized multi-stacked circular plate fan A. Furthermore, since resin can be injected at a low injecting pressure, the rigidity necessary for the mold C can be reduced, and thus the mold can be produced in an inexpensive manner.

As has been described heretofore, the present invention has following advantages.
① Since the mold for molding a multi-stacked circular plate fan is separated into the inner core and the outer core and the outer core comprises a plurality of blades which are stacked with a desired gap therebetween and communicating holes for resin flow formed in the blades, the multi-stacked fan having the inner and outer peripheries thereof open-ended can be readily and integrally molded.
② Since molding resin is injected into the circular plate fan molding space in a direction almost parallel to the blades through the circular plate gate longitudinally formed in the gate block, the deformation of the blades can be prevented in this respect, whereby resin can be uniformly injected into the space having a narrow gap and defined between the blades so that multi-stacked circular plate fans having a uniform quality can be molded.
③ Since the gate block is formed in the fixed-side of the blades which has a sufficient mechanical strength, the deformation of the blades at the time of injection of resin can be prevented and resin can be injected uniformly. The automatic cutting of the runner portion is also facilitated.
④ Usually, as method for uniformly filling resin into a narrow gap, it may be possible to increase the fluidity of resin by heating resin up to a temperature close to a durable temperature while heating the mold up to a temperature more than a usual operation temperature to prevent the lowering of the temperature of resin. However, such method, on the other hand, decreases the strength of resin by an excessive heating thus deteriorating the quality of the multi-stacked circular plate fan. To the contrary, according to this invention, as described above, resin can be filled into the gaps between the blades uniformly without heating resin so that the lowering of the strength of the molded products can be prevented.
⑤ Since a multiplicity of circular plate gates are provided approximately around the entire periphery of the circular plate fan molding spaces in a narrow interval, the distance from each gate to the ends of the circular plate fan molding space between blades can be shortened and resin can be uniformly filled in the entire portions of the circular plate fan forming spaces thus preventing the occurrence of a weld or a molding segregation. Accordingly, a large-sized multi-stacked circular plate fan can be manufactured. Furthermore, since the resin can be filled into every corners of the circular plate molding spaces even under a low injection pressure, the rigidity of the mold can be decreased and the mold can be produced in an inexpensive manner.
⑥ The blades are formed in such a manner that the faces of each spacer become approximately parallel to the faces of the neighboring spacers so that a multi-stacked fan having vanes with a trailing angle which has an excellent flow regulating effect can be integrally molded by the outer core only. Since it is unnecessary to use a collapsible core, the mold can be of a simple construction and thus the life of the mold can be prolonged.
⑦ Since the outer core is slidable in a radial direction with or without any desired trailing angle, a multi-stacked circular plate fan provided with spacers or vanes of various shapes such as radial vane or a trailing vane can be molded.
⑧ Since the circular plate fan molding space and the spacer molding portions can be defined by the blades mounted on the outer core and the inner core, the simple slide movement of the outer core provides the molding of a multi-stacked fan having an excellent flow regulating effect. Since it is unnecessary to use a collapsible core, the mold can be of a simple construction and thus the life of the mold can be prolonged.
⑨ The blade retainer plates which are provided as a retaining portion for retaining the blades mounted on the outer core form a stacked construction made of two kinds of rings so that the retaining portion can be easily manufactured. Furthermore, the degree of precision can be enhanced thus improving the precision of the multi-stacked circular plate fan. Furthermore, the maintenance of the mold such as a replacement of a part thereof can be readily carried out.
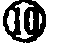 The blades have the distal ends thereof all magnetized in the same polarity so that gaps between the blades can be held equal, and thus the blade retaining portion can be obviated.
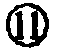 In case the inner core is made of a collapsible core which is extendible and retractable in a radial direction and blades are mounted on the outer peripheral surface of this core, a multi-stacked circular plate fan provided with flow regulating portions can be integrally molded.

## Claims

1. A mold for molding a multi-stacked circular plate fan which is characterized in that a resin mold for molding the multi-stacked circular plate fan is made of an inner core and an outer core which are separated from each other, that at least either of the inner core or the outer core is provided with a multiplicity of thin blades stacked with a desired narrow gap and communication holes for resin inflow which are formed in the respective blades, and that the gap between the blades corresponds to a thickness of the circular plate of the multi-stacked circular plate fan to be molded and the thickness of the blade corresponds to the gap between the circular plates of the multi-stacked circular plate fan to be molded.

2. A mold for molding a multi-stacked circular plate fan according to claim 1, wherein the outer periphery of the inner core and the inner periphery of the outer core are constructed such that these peripheries come into contact with each other at the time of molding.

3. A mold for molding a multi-stacked circular plate fan according to claim 1, wherein either of the inner core or the outer core is made of a plurality of separable units and these units are slidable so that they can be assembled at the time of molding to form either the inner core or the outer core and can be separated from each other at the time of removing a molded multi-stacked fan from the mold.

4. A mold for molding a multi-stacked circular plate fan according to claim 3, wherein the communication holes for resin inflow are formed in the blades mounted on either of the inner core or the outer core to define spacer molding spaces and resin is injected from the communication holes for resin inflow and is filled in gaps defined between blades and the spacer molding spaces.

5. A mold for molding a multi-stacked circular plate fan according to claim 3, wherein in injecting the resin into the gaps between stacked blades mounted on either of the inner core or the outer core, the resin is injected in a direction approximately parallel to each blade.

6. A mold for molding a multi-stacked circular plate fan according to claim 3, wherein the gaps formed between a multiplicity of blades mounted on either of the inner core or the outer core define circular plate molding spaces and most of these circular plate molding spaces are respectively provided with gates.

7. A mold for molding a multi-stacked circular plate fan according to claim 3, wherein a multiplicity of blades have their proximal portions thereof fixed so as to assure a narrow gap between blades and a gate is provided at a fixed portion to inject resin into gaps between blades.

8. A mold for molding a multi-stacked circular plate fan according to claim 3, wherein a gate block in which a resin inflow space is defined is mounted on the above fixed portion in a direction perpendicular to the blades and on the inner peripheral surface of the gate block, a slit gate which makes the resin inflow space communicate with the respective circular plate fan molding spaces is formed, whereby upon completion of molding, corresponding to the removal operation of a runner formed in the gate block, the connection between the runner and the molded resin in the circular plate fan molding spaces can be automatically terminated by a shearing force.

9. A mold for molding a multi-stacked circular plate fan according to claim 3, wherein a multiplicity of blades have their proximal ends stacked with a narrow gap on either of the inner core or the outer core and a retaining portion for retaining the distal ends of the blades is provided on either of the inner core or the outer core which is not provided with blades.

10. A mold for molding a multi-stacked circular plate fan according to claim 3, wherein a multiplicity of blades have their proximal ends stacked with a desired gap on the outer core and a retaining portion for retaining the distal ends of the blades is provided on the inner core and a gate is formed in the inner core which communicate with gaps between the blades through the retaining portion.

11. A mold for molding a multi-stacked circular plate fan according to claim 3, wherein a multiplicity of blades are formed separately and the blades are stacked while interposing a gap retainer between blades.

12. A mold for molding a multi-stacked circular plate fan according to claim 3, wherein the inner core is made of a collapsible core and a multiplicity of blades are stacked on the outer periphery of the inner core with a desired gap.

13. A mold for molding a multi-stacked circular plate fan according to claim 3, wherein a multiplicity of blades are stacked on the outer core with a desired gap between blades and the outer core is made of separable mold units and each mold unit has recesses on both separating surfaces thereof, whereby, at the time of molding, all the mold units are assembled to make the separating surfaces of each mold unit abut with the separating surfaces of the neighboring mold units so as to define a spacer molding space by abutting recesses.

14. A mold for molding a multi-stacked circular plate fan according to claim 3, wherein the outer core is made of a plurality of separable core units and each core unit is slidable in a radial direction toward or away from the inner core.

15. A mold for molding a multi-stacked circular plate fan according to claim 3, wherein a multiplicity of blades are stacked on either of the inner core or the outer core and a retaining portion for retaining the distal ends of the blades are formed in either of the inner core or the outer core which is not provided with blades and the retaining portion is made of a multiplicity of retainer plates which are separable from each other.

16. A mold for molding a multi-stacked circular plate fan according to claim 1, wherein a multiplicity of blades which are arranged with a desired gap between the blades have the distal ends thereof magnetized in the same polarity so that the gaps between the respective blades are held equal making use of the repulsive force exerted by the same polarity.

17. A mold for molding a multi-stacked circular plate fan which is characterized in that an outer core which is formed in an annular shape is disposed around an inner core, that a multiplicity of annular thin blades have proximal portions thereof securedly stacked to the inner peripheral surface of the outer core with a narrow gap between blades by means of gap retainers thus forming circular plate fan molding spaces between blades, that a multiplicity of thin retainer plates which are capable of retaining the distal ends of the blades are mounted on the outer peripheral surface of the inner core with a gap between retainer plates by means of gap retainers, that outer core is made of a plurality of separable core units which are slidable radially toward or away from the inner core and capable of forming the outer core in an assembled condition, that gate means for injecting resin into the respective circular plate fan molding spaces in a direction approximately parallel to the blades is provided at a fixed portion of stacked blades of respective core units, that recesses are formed in separating surfaces of the respective blades and these recesses are combined with recesses formed in separating surfaces of neighboring blades to define communicating holes for resin inflow as the core units are assembled at the time of molding, whereby resin can be filled in the respective circular plate fan molding spaces and the communicating holes from the gate means.

18. A mold for producing a multi-stacked circular plate fan characterized in that an outer core is disposed around an inner core, that an inner molding surface is formed by providing a plurality of first horizontal grooves and second longitudinal communicating grooves on the inner surface of the outer core, that the inner core is made of an expandible and shrinkable collapsible core, that an outer molding surface is formed by providing a plurality of second horizontal grooves and first longitudinal communicating grooves on the inner surface of the outer core, that the first horizontal grooves and second horizontal grooves are combined to define circular plate fan molding spaces while the first longitudinal communicating grooves and the second longitudinal communicating grooves are combined to define communicating holes for resin inflow, whereby a multi-stacked circular plate fan can be integrally molded.

19. A method for producing a multi-stacked circular plate fan comprising following steps;
a) a step in which an inner core and an outer core which is made of a plurality of unit molds are assembled such that a multiplicity of blades mounted on the outer core with a narrow gap between blades have the distal ends thereof come into contact with the outer periphery of the inner core,
b) a step in which resin is injected through a gate formed at a proximal portion of the outer core and resin is injected subsequently into the gap between the stacked blades and/or communicating holes for resin inflow formed in respective blades in a direction parallel to the blades from the gaps at the proximal portions of the blades,
c) a step in which, after resin being solidified, the molds units slide radially outwardly to separate from each other and to retract the outer mold from the inner core so that the blades of the molds units are removed from a molded multi-stacked circular plate fan, and
d) a step in which the molded multi-stacked circular plate fan is removed from the inner core.

20. A method for producing a multi-stacked circular plate fan according to claim 19, wherein the second step b) of the fourth invention can be replaced with a step in which communicating holes for resin inflow are formed in a multiplicity of blades formed at least either of the outer core or the inner core and the resin is injected through the communicating holes for resin inflow into the gaps formed between blades and the communicating holes for resin inflow.
